(19) Europäisches Patentamt
European Patent Office
Office européen des brevets

(11) EP 4 017 928 B1

(12) **EUROPÄISCHE PATENTSCHRIFT**

(45) Veröffentlichungstag und Bekanntmachung des Hinweises auf die Patenterteilung:
**13.08.2025 Patentblatt 2025/33**

(21) Anmeldenummer: **20760429.9**

(22) Anmeldetag: **19.08.2020**

(51) Internationale Patentklassifikation (IPC):
***C09J 7/30*** *(2018.01)* ***C08K 5/3445*** *(2006.01)*
***B60R 16/02*** *(2006.01)*

(52) Gemeinsame Patentklassifikation (CPC):
**C09J 7/30;** C09J 2203/302; C09J 2301/408; C09J 2400/22; C09J 2463/00

(86) Internationale Anmeldenummer:
**PCT/EP2020/073163**

(87) Internationale Veröffentlichungsnummer:
**WO 2021/032768 (25.02.2021 Gazette 2021/08)**

(54) **VERFAHREN ZUM UMMANTELN VON LANGGESTRECKTEM GUT, INSBESONDERE LEITUNGEN**

METHOD FOR COVERING ELONGATED ARTICLES, IN PARTICULAR LINES

PROCÉDÉ DE RECOUVREMENT D'ARTICLES ALLONGÉS, EN PARTICULIER DE LIGNES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.08.2019 DE 102019212591**

(43) Veröffentlichungstag der Anmeldung:
**29.06.2022 Patentblatt 2022/26**

(73) Patentinhaber: **tesa SE**
**22848 Norderstedt (DE)**

(72) Erfinder:
- **SCHUH, Christian**
  **22767 Hamburg (DE)**
- **KIRPICENOK, Olga**
  **25474 Ellerbek (DE)**

(74) Vertreter: **tesa SE**
**Hugo-Kirchberg-Straße 1**
**22848 Norderstedt (DE)**

(56) Entgegenhaltungen:
**EP-A1- 2 497 805**
**EP-A1- 3 499 664**
**DE-A1- 102017 221 072**
**JP-A- 2004 056 861**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 4 017 928 B1

## Beschreibung

Die Erfindung betrifft ein Verfahren zum Ummanteln von langgestrecktem Gut, insbesondere Kabelsätzen.

Seit geraumer Zeit werden in der Industrie Klebebänder zur Herstellung von Kabelbäumen verwendet. Die Klebebänder werden zum Bündeln einer Vielzahl von elektrischen Leitungen vor dem Einbau oder in bereits montiertem Zustand eingesetzt, um beispielsweise den Raumbedarf des Leitungsbündels durch Bandagieren zu reduzieren und zusätzlich Schutzfunktionen wie Schutz gegen mechanische und/oder thermische Beanspruchung zu erreichen. Gängige Formen von Klebebändern umfassen Folien- oder Textilträger, die in der Regel einseitig mit Haftklebemassen beschichtet sind. Klebebänder zum Ummanteln von langgestreckten Gütern sind beispielsweise aus der EP 1 848 006 A2, der DE 10 2013 213 726 A1, der JP 2004 056861 A, EP 3 499 664 A1 und der EP 2 497 805 A1 bekannt.

Derzeitige mit Klebeband umwickelte Kabelsätze sind in der Regel flexibel. Dies ist jedoch aus fertigungstechnischen Gründen oft unerwünscht. In der Fertigung werden die Kabelstränge in der Regel zu einem Kabelplan vorgefertigt und dann in das zu bestückende Objekt wie beispielsweise Automobile eingesetzt. Ein Kabelsatzplan entspricht der tatsächlichen räumlichen Anordnung der einzelnen Kabelstränge in dem Kabelsatz, also welcher Kabelstrang an welcher Stelle in welchem Winkel gebogen ist, wo sich Positionen von Abzweigen oder Ausbindungen befinden und mit welchen Steckern die Enden der Kabelstränge belegt sind.

Um die einzelnen Stränge des Kabelsatzes in einer bestimmten Form zu halten, so dass sie zum Beispiel im Motorraum um den Motor herumgeführt werden können, ohne mit dem Motor in Kontakt zu kommen, werden um den mit Klebeband umwickelten Kabelbaum üblicherweise nachträglich Spritzgussteile angebracht. Diese Spritzgussteile haben aber den Nachteil, dass ein zusätzlicher Material- und Montageaufwand anfällt.

In der WO 2015/004190 A1 wird ein Verfahren zum Ummanteln von langgestrecktem Gut wie insbesondere Leitungen oder Kabelsätzen offenbart, bei dem das langgestreckte Gut mit einem Klebeband mit darauf aufgebrachter aushärtbarer Klebemasse in einer Schraubenlinie oder in axialer Richtung umhüllt wird und die auf dem Klebeband aufgebrachte Klebemasse durch Zufuhr von Strahlungsenergie wie Wärme ausgehärtet wird. Zur thermischen Aushärtung wird dabei eine Temperatur von 175°C angewendet.

Aufgabe der vorliegenden Erfindung ist es daher, ein Verfahren zum Ummanteln von langgestrecktem Gut unter Verwendung eines rigiden Klebebands zur Verfügung zu stellen, das zu einem ausreichend ausgesteiften Gut führt. Aufgabe der vorliegenden Erfindung ist es auch ein mit dem Verfahren erhältliches Produkt zur Verfügung zu stellen.

Zur Lösung des technischen Problems wird ein Verfahren zum Ummanteln von langgestrecktem Gut vorgeschlagen, umfassend einen bandförmigen Träger, der auf mindestens einer Seite mit einer selbstklebenden Klebeschicht versehen ist, die thermisch aushärtbar ist.

Gelöst wird diese Aufgabe durch ein Verfahren zum Ummanteln von langgestrecktem Gut wie insbesondere Leitungen oder Kabelsätzen, mit einem Klebeband umfassend einen bandförmigen Träger, der auf mindestens einer Seite mit einer haftklebrigen Klebemasse versehen ist, wobei die Klebemasse eine polymere Filmbildner-Matrix sowie eine härtbare Zusammensetzung umfasst, wobei die härtbare Zusammensetzung ein oder mehrere Epoxidharze sowie zumindest ein Härtungsreagenz für Epoxidharze umfasst, wobei das Härtungsreagenz zumindest eine Imidazolverbindung der allgemeinen Formel

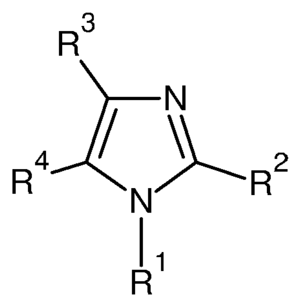

umfasst, wobei

$R^1$, $R^2$, $R^3$ und $R^4$ unabhängig voneinander Wasserstoff oder funktionelle Gruppen oder organische Reste sind, mit der Maßgabe, dass zumindest einer der Reste $R^1$, $R^2$, $R^3$ und $R^4$ eine funktionelle Gruppe oder ein organischer Rest $R^{Het}$ ist, der zumindest ein Heteroatom aufweist, wobei das Klebeband in einer Schraubenlinie um das langgestreckte Gut geführt wird oder das langgestreckte Gut in axialer Richtung von dem Klebeband umhüllt wird, das langgestreckte Gut mitsamt dem umhüllenden Klebeband in die gewünschte Anordnung, insbesondere in den Kabelsatzplan gebracht wird, das langgestreckte Gut in dieser Anordnung gehalten wird, die aushärtbare Klebemasse durch die Zufuhr von thermischer Energie insbesondere bei einer Temperatur zwischen zu 120 °C und 200 °C für 10 bis 120 Minuten zum Aushärten gebracht wird. Die Imidazolverbindung wird in Form eines Imidazol-Säure-Addukts eingesetzt.

Die Erfindung betrifft also die Verwendung von Imidazolverbindungen bei der Herstellung von aushärtbaren Klebebändern, wobei die Imidazolverbindungen als Härter für Epoxidharze beziehungsweise als Beschleuniger für die Härtung von Epoxidharzen dienen. Allgemein als Imidazolverbindungen werden im Rahmen dieser Schrift alle Verbindungen bezeichnet, die mindestens eine chemische Struktureinheit

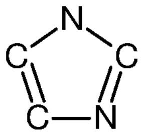

umfassen, unabhängig von den jeweiligen Substituenten an den Stickstoff- und Kohlenstoffatomen.

Dementsprechend beschreibt die Erfindung ein Klebeband umfassend zumindest eine Schicht einer haftklebrigen Klebemasse, wobei die Klebemasse eine polymere Filmbildner-Matrix sowie eine härtbare Zusammensetzung umfasst. Die härtbare Zusammensetzung umfasst ihrerseits zumindest ein Epoxidharz sowie zumindest ein Härtungsreagenz für das Epoxidharz. Erfindungsgemäß enthält das Härtungsreagenz zumindest eine Imidazolverbindung, und zwar eine solche der der allgemeinen Formel

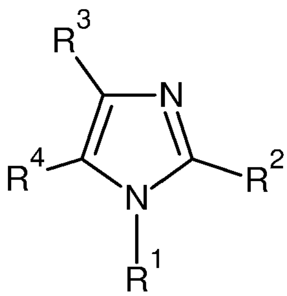

wobei $R^1$, $R^2$, $R^3$ und $R^4$ unabhängig voneinander Wasserstoff oder funktionelle Gruppen oder organische Reste sind, mit der Maßgabe, dass zumindest einer der Reste $R^1$, $R^2$, $R^3$ und $R^4$ eine funktionelle Gruppe oder ein organischer Rest ist, der beziehungsweise die zumindest ein Heteroatom aufweist (die das Heteroatom umfassende funktionelle Gruppe beziehungsweise der das Heteroatom umfassende organische Rest werden im Folgenden gemeinschaftlich als Rest $R^{Het}$ bezeichnet). Diese spezielle, erfindungsgemäß eingesetzte Imidazolverbindung wird im Weiteren auch als "erfindungsgemäße Imidazolverbindung" bezeichnet.

Überraschend überstehen die erfindungsgemäßen Imidazolverbindungen die drastischen Bedingungen bei der Klebebandherstellung, ohne ihre guten Eigenschaften in Hinblick auf eine hohe Lagerstabilität zu verlieren.

Die Lehre der vorliebenden Erfindung bietet somit die besondere Möglichkeit, Reaktivklebemassen in Form dicker Klebebandschichten mit hoher Lagerstabilität zu erhalten.

Die Reste $R^1$, $R^2$, $R^3$ beziehungsweise $R^4$, die keine Reste $R^{Het}$ sind, also diejenigen, die keine Reste sind, die weitere Heteroatome in sich haben, können sehr vorteilhaft jeweils unabhängig voneinander gewählt sein als Wasserstoff oder als ein aliphatischer oder aromatischer Kohlenwasserstoffrest mit 1 bis 15 Kohlenstoffatomen, der keine Heteroatome aufweist.

Vorteilhaft können beispielsweise 5 bis 80 Gew.-Teile wenigstens der polymeren Filmbildner-matrix (M) und 20 bis 95 Gew.-Teile des einen Epoxidharzes beziehungsweise der Summe an Epoxidharzen eingesetzt werden, wenn sich die Gew.-Teile der Filmbildner-Matrix und der Epoxidharze zu 100 ergänzen. Die bevorzugt einzusetzende Menge an Härtungsreagenz kann je nach eingesetzten Härtern und gegebenenfalls Beschleunigern variieren, siehe hierzu weiter unten.

Die Härtung der härtbaren Zusammensetzung erfolgt insbesondere über die Reaktion eines oder mehrere Reaktivharze mit einem oder mehreren Härtern und gegebenenfalls Beschleunigern (den Komponenten des Härtungsreagenz). Die härtbare Zusammensetzung umfasst als Reaktivharz zumindest ein Epoxidharz, kann aber auch mehrere Epoxidharze umfassen. Das eine Epoxidharz beziehungsweise die mehreren Epoxidharze können die einzigen Reaktivharze in der härtbaren Zusammensetzung sein, insbesondere also die einzigen Komponenten der härtbaren Zusammensetzung, die mit Härtern - gegebenenfalls nach entsprechender Aktivierung - zu einer Aushärtung der Zusammensetzung führen können. Grundsätzlich ist es aber auch möglich, dass neben dem Epoxidharz beziehungsweise neben den Epoxidharzen weitere Reaktivharze, die keine Epoxidharze sind, zugegen sind.

Als Epoxidharz(e) werden beispielsweise und vorteilhaft ein oder mehrere elastomermodifizierte, insbesondere

nitrilkautschukmodifizierte, Epoxidharze und/oder ein oder mehrere silanmodifizierte Epoxidharze und/oder ein oder mehrere fettsäuremodifizierte Epoxidharze eingesetzt.

Reaktivharze sind vernetzbare Harze, nämlich funktionelle Gruppen umfassende, oligomere oder kurzkettig polymere Verbindungen, insbesondere mit einer zahlenmittleren Molmasse $M_n$ von nicht mehr als 10 000 g/mol; und zwar insbesondere solche mit mehreren funktionellen Gruppen im Makromolekül. Da es sich bei den Harzen um eine Verteilung von Makromolekülen unterschiedlicher Einzelmassen handelt, können die Reaktivharze Fraktionen enthalten, deren zahlenmittlere Molmasse deutlich höher liegt, zum Beispiel bis etwa 100 000 g/mol, dies gilt insbesondere für polymermodifizierte Reaktivharze, wie beispielsweise elastomermodifizierte Reaktivharze.

Reaktivharze unterscheiden sich von für Klebmassen, insbesondere für Haftklebemassen, häufig eingesetzten Klebharzen. Unter einem "Klebharz" wird entsprechend dem allgemeinen Fachmannverständnis ein oligomeres oder polymeres Harz verstanden, das lediglich die Adhäsion (den Tack, die Eigenklebrigkeit) der Haftklebemasse im Vergleich zu der keinen Klebharz enthaltenden, ansonsten aber identischen Haftklebemasse erhöht. Typischerweise enthalten Klebharze außer Doppelbindungen (im Fall der ungesättigten Harze) keine reaktiven Gruppen, da sich ihre Eigenschaften über die Lebensdauer des Haftklebstoffes nicht ändern sollen.

Die funktionellen Gruppen der Reaktivharze sind derart, dass sie unter geeigneten Bedingungen - insbesondere nach einer Aktivierung beispielsweise durch erhöhte Temperatur (thermische Energie) und/oder durch aktinische Strahlung (wie Licht, UV-Strahlung, Elektronenstrahlung usw.) und/oder durch Initiierung und/oder Katalyse durch weitere chemische Verbindungen, wie etwa Wasser (feuchtigkeitshärtende Systeme) - mit einem Härtungsreagenz zu einer Aushärtung der die Reaktivharze und das Härtungsreagenz umfassenden Zusammensetzung führen, insbesondere im Sinne einer Vernetzungsreaktion. Härtungsreagenzien können beispielswiese aus einem Härter oder aus einer Mischung mehrere Härter oder aus einer Mischung eines oder mehrerer Härter mit Beschleunigern gebildet werden.

Als Epoxidharze werden im Rahmen dieser Schrift Epoxid-Gruppen umfassende Reaktivharze, insbesondere solche mit mehr als einer Epoxid-Gruppe pro Molekül, bezeichnet, also solche Reaktivharze, bei denen die funktionellen Gruppen oder zumindest ein Teil der funktionellen Gruppen Epoxidgruppen sind. Die Umwandlung der Epoxidharze während der Härtungsreaktion der härtbaren Zusammensetzung erfolgt insbesondere über Polyadditionsreaktionen mit geeigneten Epoxid-Härtern beziehungsweise durch Polymerisation über die Epoxid-Gruppen. Je nach Wahl des Epoxid-Härters können auch beide Reaktionsmechanismen parallel stattfinden.

Als Härter bezeichnet wird im Rahmen dieser Schrift entsprechend DIN 55945: 1999-07 die - als Bindemittel wirkende(n) - chemische(n) Verbindung(en) bezeichnet, die den vernetzbaren Harzen zugesetzt wird (werden), um die Härtung (Vernetzung) der härtbaren Zusammensetzung, insbesondere in Form eines applizierten Films, zu bewirken. In den härtbaren Zusammensetzungen ist Härter dementsprechend die Bezeichnung für diejenige Komponente, die nach dem Vermischen mit den Reaktivharzen und entsprechender Aktivierung die chemische Vernetzung bewirkt.

Als Beschleuniger werden im Rahmen dieser Schrift solche chemischen Verbindungen bezeichnet, die bei Anwesenheit eines anderen Härters die Reaktionsgeschwindigkeit der Härtungsreaktion und/oder die Geschwindigkeit der Aktivierung der Härtung der Epoxidharze insbesondere im Sinne eines Synergismus erhöhen. Die Listen zur Auswahl der als Härter beziehungsweise als Beschleuniger einsetzbaren Substanzen überschneiden sich dabei, wobei die einzelnen Vertreter auch gleichzeitig beide Funktionsweisen realisieren können, so dass der Übergang zwischen Härter und Beschleuniger in der Regel fließend ist. Weiterhin wirken häufig chemische Verbindungen, die im alleinigen Einsatz als Härter genutzt werden können, im Einsatz mit einem weiteren Härter als Beschleuniger. Härtungsreaktionen sind in der dynamischen Differenzkalometrie (DSC) grundsätzlich als Peak identifizierbar. Als Beschleuniger sind insbesondere solche Verbindungen zu verstehen, deren Zugabe den Härtungspeak eines bestimmten Härters zu niedrigeren Temperaturen verschiebt. Zusätzliche Härter sind hingegen insbesondere solche Verbindungen, die zu einem zweiten - im Wesentlichen isoliert vorliegenden, sich aber gegebenenfalls auch mit dem ersten Peak überlagernden - Peak einer Härtungsreaktion im DSC führen.

Mit dem Begriff Härtungsreagenz wird - im Unterschied zu den einzelnen Härtern und Beschleunigern - die Gesamtheit der eingesetzten Härter und gegebenenfalls Beschleuniger für die Härtungsreaktion mittels der korrespondieren reaktiven Komponente (dem beziehungsweise den entsprechenden Reaktivharz(en)) bezeichnet. Das Härtungsreagenz kann dementsprechend insbesondere aus einem oder aus mehreren Härtern oder aus einem oder mehreren Härtern in Gegenwart eines oder mehrerer Beschleuniger gebildet werden.

Als (Co-)Härter werden im Rahmen dieser Schrift die einzelnen Komponenten des Härtungsreagenz bezeichnet, die also dieses Härtungsreagenz in Summe bilden. Der Begriff (Co-)Härter steht also für einen jeweilig anwesenden Härter oder Beschleuniger.

Die erfindungsgemäße Imidazolverbindung dient dabei im alleinigen Einsatz - also als einzige Komponente des Härtungsreagenz - als Härter für die Härtungsreaktion der härtbaren Zusammensetzung. Wird sie zusammen mit weiteren, als Härter und/oder Beschleuniger dienenden chemischen Verbindungen eingesetzt, kann sie selbst als Härter oder als Beschleuniger für die Härtungsreaktion der härtbaren Zusammensetzung dienen.

Bei der weiteren Beschreibung von Komponenten, Verbindungen, Zusammensetzungen oder dergleichen, die im Rahmen der Lehre der vorliegenden Schrift einzeln oder zu mehreren eingesetzt werden können (zum Beispiel

eingeführt durch "zumindest ein Epoxidharz" oder "ein oder mehrere Epoxidharze"), soll im weiteren die Verwendung des Plurals die Einzahl umfassen (die Aussage "vorteilhafte Epoxidharze werden gewählt aus der Liste der Verbindungen X, Y, Z" beinhaltet somit auch die Offenbarung, dass bei Anwesenheit nur eines Epoxidharzes dieses vorteilhaft aus der genannten Liste gewählt sein kann). Umgekehrt soll die Verwendung des Singulars die Spezifizierung nicht auf den Fall beschränken, in der die Komponente nur einzeln eingesetzt wird (die Aussage "Beispiele des Epoxidharzes umfassen vorteilhaft die Verbindungen X, Y und Z" beinhaltet somit auch die Offenbarung, dass bei mehreren anwesenden Epoxidharzen alle - jeweils unabhängig voneinander - vorteilhaft aus diese Liste gewählt werden können). Sofern es im Besonderen auf Einzahl oder Plural konkret ankommt, ist dies an entsprechender Stelle angegeben.

Bei der härtbaren Zusammensetzung des erfindungsgemäßen Klebebandes handelt es sich in bevorzugter Weise um einen Klebstoff, insbesondere einen Reaktivklebstoff, besonders bevorzugt um einen bei Raumtemperatur (23 °C) haftklebrigen Klebstoff beziehungsweise Reaktivklebstoff.

Klebstoffe sind (nach DIN EN 923: 2008-06) nichtmetallische Stoffe, die Fügeteile durch Flächenhaftung (Adhäsion) und innere Festigkeit (Kohäsion) verbinden. Klebstoffe können selbstklebrig sein und/oder erst durch bestimmte Aktivierung, etwa durch thermische Energie und/oder aktinische Strahlung ihre endgültige Klebkraft ausbilden. Reaktivklebstoffe (die vor Aktivierung selbstklebrig oder nichtklebrig sein können) umfassen chemisch reaktive Systeme, die durch Aktivierung zu einer Härtungsreaktion führen und besonders hohe Klebkräfte (insbesondere größer 1MPa) zu den Substraten, auf denen sie verklebt werden, ausbilden können.

Die Härtung beziehungsweise Verfestigung wird durch chemische Reaktion der Bausteine miteinander erreicht. Im Gegensatz zu Haftklebstoffen, die zur Kohäsionserhöhung regelmäßig auch vernetzt werden, aber auch nach der Vernetzung noch viskoelastische Eigenschaften aufweisen und insbesondere nach der Verklebung keine Verfestigung mehr erfahren, führt bei Reaktionsklebstoffen in der Regel erst die Härtung zu der eigentlichen Verklebung mit den gewünschten Klebkräften; der Klebstoff selbst ist nach der Härtung häufig duroplastisch oder weitgehend duroplastisch ("lackartig").

Mit dem Attribut "haftklebrig" - auch als Bestandteil von Substantiven wie etwa in Haftklebstoff -oder synonym mit dem Attribut "selbstklebrig" - ebenfalls auch als Bestandteil von Substantiven - werden im Rahmen dieser Schrift solche Zusammensetzungen bezeichnet, die bereits unter relativ schwachem Andruck - sofern nicht anders angegeben, bei Raumtemperatur, also 23 °C -eine dauerhafte Verbindung mit dem Haftgrund erlauben und nach Gebrauch im Wesentlichen rückstandsfrei vom Haftgrund wieder abgelöst werden können. Haftklebstoffe werden bevorzugt in Form von Klebebändern eingesetzt. Im Sinne der vorliegenden Erfindung besitzt ein haftklebriges Klebeband eine Klebkraft im unausgehärteten Zustand von wenigstens 1 N/cm. Die Klebkraft wird hierbei auf Stahl analog ISO 29862:2007 (Methode 3) bei 23 °C und 50 % relativer Luftfeuchte bei einer Abzugsgeschwindigkeit von 300 mm/min und einem Abzugswinkel von 180° bestimmt. Als Verstärkungsfolie wird eine geätzte PET-Folie mit einer Dicke von 36 μm verwendet, wie sie von der Firma Coveme (Italien) erhältlich ist. Die Verklebung eines 2 cm breiten Messstreifens wird dabei mittels einer Anrollmaschine mit 4 kg bei einer Temperatur von 23 °C vorgenommen. Das Klebeband wird sofort nach der Applikation abgezogen. Der Messwert (in N/cm) ergab sich als Mittelwert aus drei Einzelmessungen.

Haftklebstoffe wirken somit bei Raumtemperatur permanent haftklebrig, weisen also eine hinreichend geringe Viskosität und eine hohe Anfassklebrigkeit auf, so dass sie die Oberfläche des jeweiligen Klebegrunds bereits bei geringem Andruck benetzen. Die Verklebbarkeit der Haftklebestoffe beruht auf ihren adhäsiven Eigenschaften und die Wiederablösbarkeit auf ihren kohäsiven Eigenschaften.

Haftklebrige Reaktivklebstoffe haben bei Raumtemperatur haftklebrige Eigenschaften (und sind in diesem Zustand insbesondere viskoelastisch), weisen aber bei und nach der Härtung das Verhalten von Reaktivklebstoffen auf.

Erfindungsgemäß wird die härtbare Zusammensetzung, insbesondere der Haftklebstoff, film- beziehungsweise schichtförmig als Bestandteil eines Klebebandes verwendet.

Hierzu wird die härtbare Zusammensetzung, insbesondere der Haftklebstoff, als Schicht auf einen permanenten oder einen temporär vorliegenden Träger aufgebracht, insbesondere mit den dem Fachmann bekannten Beschichtungsverfahren. Die Beschichtung des bahnförmigen Materials erfolgt bevorzugt lösemittelfrei, beispielsweise mittels Düsenbeschichtung oder mit einem Mehrwalzenauftragswerk. Besonders effektiv und vorteilhaft kann dies mit einem 2- bis 5-Walzenauftragswerk erfolgen, beispielweise mit einem 4-Walzenauftragswerk erfolgen, so dass die Selbstklebemasse bei Durchgang durch ein oder mehrere Walzenspalte vor Übergabe auf das bahnförmige Material auf die gewünschte Dicke ausgeformt wird. Die Walzen des Auftragswerkes können dabei einzeln temperiert werden, beispielsweise auf Temperaturen von 20 °C bis 150 °C eingestellt werden.

Filmbildner-Matrix

Das erfindungsgemäße Klebeband umfasst eine polymere Filmbildner-Matrix, in der die härtbare Zusammensetzung, die zumindest ein Epoxidharz sowie zumindest ein Härtungsreagenz für das Epoxidharz umfasst, enthalten ist. Derartige Klebebänder umfassen somit einen Klebefilm, der grundsätzlich ausgebildet ist aus einer polymeren filmbildenden Matrix (im Rahmen dieser Schrift kurz als "Filmbildner-Matrix" bezeichnet) mit der darin eingebetteten härtbaren

Zusammensetzung, die insbesondere als Reaktivklebstoff dient. Die Filmbildner-Matrix bildet dabei einen selbsttragenden dreidimensionalen Film aus (wobei die räumliche Ausdehnung in Dickenrichtung des Films in der Regel sehr viel kleiner ist als die räumlichen Ausdehnungen in Langs- und Querrichtung, also als in den zwei Raumrichtungen der Flächenausdehnung des Films; zur Bedeutung des Begriffs "Film" siehe hierzu auch weiter unten). In dieser Filmbildner-Matrix ist die härtbare Zusammensetzung, insbesondere der Reaktivklebstoff, bevorzugt im Wesentlichen räumlich gleichverteilt (homogen), insbesondere so dass der Reaktivklebstoff - der ohne die Matrix gegebenenfalls nicht selbsttragend wäre - im erfindungsgemäßen Klebefilm im Wesentlichen die gleiche (makroskopische) Raumverteilung einnimmt wie die Filmbildner-Matrix.

Aufgabe dieser Matrix ist es, ein inertes Grundgerüst für die reaktiven Monomere und/oder Reaktivharze zu bilden, so dass diese in einem Film oder einer Folie eingelagert sind. Somit können auch ansonsten flüssige Systeme in Filmform angeboten werden. Auf diese Art und Weise wird eine einfachere Handhabung gewährleistet. Die der Filmbildner-Matrix zugrunde liegenden Polymere sind dabei durch hinreichende Wechselwirkungen der Makromoleküle untereinander in der Lage, einen selbsttragenden Film ausbilden zu können, beispielweise - ohne sich hierdurch im Erfindungsgedanken unnötig beschränken zu wollen - durch Ausbildung eines Netzwerks aufgrund physikalischer und/oder chemischer Vernetzung.

Inert bedeutet in diesem Zusammenhang, dass die reaktiven Monomere und/oder Reaktivharze unter geeignet gewählten Bedingungen (zum Beispiel bei ausreichend geringen Temperaturen) im Wesentlichen nicht mit der polymeren Filmbildner-Matrix reagieren.

Als geeignete Filmbildner-Matrices zur Verwendung in der vorliegenden Erfindung werden vorzugsweise ein thermoplastisches Homopolymer oder ein thermoplastisches Copolymer eingesetzt (im Rahmen dieser Schrift zusammenfassend als "Polymere" bezeichnet), oder ein Blend aus thermoplastischen Homopolymeren oder aus thermoplastischen Copolymeren oder aus einem oder mehreren thermoplastischen Homopolymeren mit einem oder mehreren thermoplastischen Copolymeren. In einer bevorzugten Vorgehensweise werden ganz oder teilweise semikristalline thermoplastische Polymere eingesetzt.

Als thermoplastische Polymere können grundsätzlich beispielsweise Polyester, Copolyester, Polyamide, Copolyamide, Polyacrylsäureester, Acrylsäureester-Copolymere, Polymethacrylsäureester, Methacrylsäureester-Copolymere, thermoplastische Polyurethane sowie chemisch oder physikalisch vernetzte Stoffe der zuvor genannten Verbindungen gewählt werden. Die genannten Polymere können jeweils als einzig eingesetztes Polymer oder als Komponente eines Blends verwendet werden.

Weiterhin sind auch Elastomere und - als Vertreter der bereits genannten thermoplastischen Polymere - thermoplastische Elastomere alleinig oder im Gemisch als polymere Filmbildner-Matrix denkbar. Bevorzugt werden thermoplastische Elastomere, insbesondere semikristalline. Die genannten - insbesondere thermoplastischen - Elastomere können jeweils als einzig eingesetztes Polymer oder als Komponente eines Blends, beispielweise mit weiteren Elastomeren und/oder thermoplastischen Elastomeren und/oder anderen thermoplastischen Polymeren, wie beispielweise solchen im vorstehenden Absatz genannten Vertretern, verwendet werden.

Besonders bevorzugt sind thermoplastische Polymere mit Erweichungstemperaturen kleiner als 100 °C. In diesem Zusammenhang steht der Begriff Erweichungstemperatur für die Temperatur, ab der das thermoplastische Granulat mit sich selbst verklebt. Wenn es sich bei dem Bestandteil der polymeren Filmbildner-Matrix um ein semikristallines thermoplastisches Polymer handelt, dann weist es sehr bevorzugt neben seiner Erweichungstemperatur (die mit dem Schmelzen der Kristallite zusammenhängt) eine Glasübergangstemperatur von höchstens 25 °C, bevorzugt höchstens 0 °C auf.

In einer bevorzugten, erfindungsgemäßen Ausführungsform wird ein thermoplastisches Polyurethan eingesetzt. Vorzugsweise besitzt das thermoplastische Polyurethan eine Erweichungstemperatur von kleiner als 100 °C, insbesondere kleiner als 80 °C.

In einer besonders bevorzugten, erfindungsgemäßen Ausführungsform wird Desmomelt 530® als polymere Filmbildner-Matrix eingesetzt, das im Handel bei der Bayer Material Science AG, 51358 Leverkusen, Deutschland, erhältlich ist. Desmomelt 530® ist ein hydroxyl-terminiertes, weitgehend lineares, thermoplastisches, stark kristallisierendes Polyurethan-Elastomer.

Vorteilhaft können beispielsweise 5 bis 80 Gew.-Teile wenigstens der polymeren Filmbildner-Matrix innerhalb eines reaktiven Klebstofffilms eingesetzt werden. Die Menge der polymeren Filmbildner-Matrix innerhalb eines reaktiven Klebstofffilms liegt bevorzugt erfindungsgemäß im Bereich von etwa 15 bis 60 Gew.%, bevorzugt etwa 30 bis 50 Gew.%, bezogen auf die Gesamtmenge an Polymeren der polymeren Filmbildner-Matrix und Reaktivharzen der härtbaren Zusammensetzung. Klebmassen mit besonders hohen Verklebungsfestigkeiten nach Aushärtung werden erhalten, wenn der Anteil der Filmbildnermatrix im Bereich von 15 bis 25 Gew.-% liegt. Solche Klebmassen, insbesondere mit weniger als 20% Filmbildnermatrix sind im unausgehärteten Zustand sehr weich und weniger formstabil. Die Formstabilität ist verbessert, wenn mehr als 20 Gew.-%, insbesondere mehr als 30% verwendet werden. Zwischen 40 und 50 Gew.-% werden Haftklebmassen erhalten, die in Bezug auf Formstabilität die besten Eigenschaften aufzeigen, jedoch sinkt die maximal erreichbare Verklebungsfestigkeit. Sehr ausgewogene Klebmassen in Bezug auf Formstabilität und

Verklebungsfestigkeit werden im Bereich von 30 bis 40 Gew.-% Filmbildnermatrix erhalten Die vorstehende Gew.-%-Angaben sind hier jeweils bezogen auf die Summe aus die Filmbildner-Matrix bildenden Polymeren und Epoxidharzen.

In einer weiteren sehr bevorzugten Vorgehensweise werden als Matrixpolymere nicht-thermoplastische Elastomere eingesetzt. Bei den nicht-thermoplastischen Elastomeren kann es sich insbesondere um einen Nitrilkautschuk oder eine Mischung mehrerer Nitrilkautschuke oder eine Mischung eines oder mehrerer anderer nicht-thermoplastischer Elastomere mit einem oder mehreren Nitrilkautschuken handeln.

Als "nicht-thermoplastisch" im Sinne der vorliegenden Schrift werden solche Substanzen beziehungsweise Zusammensetzungen verstanden, die bei Erwärmung auf eine Temperatur von 150 °C, bevorzugt bei Erwärmung auf eine Temperatur von 200 °C, sehr bevorzugt bei Erwärmung auf eine Temperatur von 250 °C kein thermoplastisches Verhalten zeigen, insbesondere derart, dass sie im Thermoplastizitäts-Test (siehe Experimenteller Teil) als nicht thermoplastisch gelten.

Der Begriff ‚Nitrilkautschuk' steht wie üblich für ‚AcrylnitrilButadien-Kautschuk', Kurzzeichen NBR, abgeleitet von nitrile butadiene rubber, und bezeichnet Synthesekautschuke, die durch Copolymerisation von Acrylnitril und Butadien in Masseverhältnissen von ungefähr 10 : 90 bis 52 : 48 (Acrylnitril : Butadien) gewonnen werden.

Die Herstellung von Nitrilkautschuken erfolgt praktisch ausschließlich in wässriger Emulsion. Im Stand der Technik werden die dabei resultierenden Emulsionen einerseits als solche (NBR-Latex) eingesetzt oder andererseits zum Festkautschuk aufgearbeitet.

Die Eigenschaften des Nitrilkautschuks hängen ab vom Verhältnis der Ausgangsmonomeren und von seiner Molmasse. Aus Nitrilkautschuk zugängliche Vulkanisate besitzen hohe Beständigkeit gegenüber Kraftstoffen, Ölen, Fetten und Kohlenwasserstoffen und zeichnen sich gegenüber solchen aus Naturkautschuk durch günstigeres Alterungsverhalten, niedrigeren Abrieb und verminderte Gasdurchlässigkeit aus.

Nirilkautschuke sind in einer großen Bandbreite verfügbar. Neben dem Acrylnitril-Gehalt erfolgt die Unterscheidung der verschiedenen Typen insbesondere anhand der Viskosität des Kautschuks. Diese wird üblicherweise durch die Mooney-Viskosität angegeben. Diese wiederum wird zum einen durch die Anzahl der Kettenverzweigungen im Polymer und zum anderen durch die Molmasse bestimmt. Prinzipiell unterscheidet man bei der Polymerisation zwischen der sogenannten Kalt- und der Heißpolymerisation. Die Kaltpolymerisation erfolgt üblicherweise bei Temperaturen von 5 bis 15 °C und führt im Gegensatz zur Heißpolymerisation, die üblicherweise bei 30 bis 40 °C durchgeführt wird, zu einer geringeren Anzahl von Kettenverzeigungen.

Erfindungsgemäß geeignete Nitrilkautschuke sind von einer Vielzahl von Herstellern wie zum Beispiel Nitriflex, Zeon, LG Chemicals und Lanxess erhältlich.

Carboxylierte Nitrilkautschuk-Typen entstehen durch Terpolymerisation von Acrylnitril und Butadien mit kleinen Anteilen an Acrylsäure und/oder Methacrylsäure in Emulsion. Sie zeichnen sich durch hohe Festigkeit aus. Die selektive Hydrierung der C=C-Doppelbindung von Nitrilkautschuk führt zu hydrierten Nitrilkautschuken (H-NBR) mit verbesserter Beständigkeit gegen Temperaturerhöhung (bis 150 °C in Heißluft oder Ozon) oder Quellmittel (zum Beispiel schwefelhaltige Rohöle, Brems- beziehungsweise Hydraulikflüssigkeiten). Die Vulkanisation erfolgt mit üblichen Schwefelvernetzern, Peroxiden oder mittels energiereicher Strahlung.

Neben carboxylierten oder hydrierten Nitrilkautschuken gibt es auch flüssige Nitrilkautschuke. Diese werden während der Polymerisation durch die Zugabe von Polymerisationsreglern in ihrer Molmasse begrenzt und werden daher als flüssige Kautschuke erhalten.

Zwecks verbesserter Verarbeitungsfähigkeit von Kautschuken, beispielsweise dem Granulieren von Granulat aus großen Kautschukballen vor der Weiterverarbeitung in Mischern, werden dem Kautschuken häufig inerte Trennhilfsmittel wie Talkum, Silicate (Talk, Ton, Glimmer), Zinkstearat und PVC-Puder zugesetzt.

In einer Ausführungsvariante der Erfindung werden als nichtthermoplastsiche Elastomere teilweise oder ausschließlich solche Nitrilkautschuke eingesetzt, die einen Acrylnitrilantreil von mindestens 25 %, bevorzugt von mindestens 30 %, sehr bevorzugt von mindestens 35 % besitzen.

In hervorragender Weise lassen sich als Matrixpolymere heißpolymerisierte Nitrilkautschuke einsetzen. Solche Nitrilkautschuke sind hochverzweigt, besitzen daher eine besonders hohen Neigung zur physikalischen Anvernetzung und zeigen somit besonders gute Scherfestigkeiten auch im unausgehärteten Zustand.

Härtungsreagenz

Wie bereits vorstehend dargelegt umfasst das Härtungsreagenz die Summe der (Co-)Härter, also die Gesamtheit der vorliegenden Härter und gegebenenfalls vorhandenen Beschleuniger, wobei zumindest eine erfindungsgemäße Imidazolverbinung anwesend ist. Die zumindest eine erfindungsgemäße Imidazolverbindung des Härtungsreagenz kann als Härter und/oder als Beschleuniger für die Härtungsreaktion dienen. Die im Rahmen dieser Schrift gemachten Aussagen zur erfindungsgemäßen Imidazolverbindung gelten unabhängig davon, ob diese als Härter oder als Beschleuniger eingesetzt wird, es sei denn es wird im Einzelfall explizit auf eine der Einsatzzwecke hingewiesen.

Erfindungsgemäße Imidazolverbindungen müssen üblicherweise nicht in stöchiometrischen Mengen, bezogen

auf die Funktionalität des zu härtenden Epoxidharzes, eingesetzt werden, um gute Wirkung als Härter beziehungsweise als Beschleuniger zu entfalten.

Wird eine erfindungsgemäße Imidazolverbindung als alleiniger Härter eingesetzt, so betragen typische Einsatzmengen 15 bis 35 Gew.-Teile auf 100 Gew.-Teile des/der zu härtenden Epoxidharze(s). Werden mehrere erfindungsgemäße Imidazolverbindungen eingesetzt, so liegt die Summe der eingesetzten Mengen vorteilhaft im vorgenannten Bereich.

In alternativer Vorgehensweise liegt die Einsatzmenge der erfindungsgemäßen Imidazolverbindung - beziehungsweise liegt die Gesamtmenge bei mehreren eingesetzten erfindungsgemäßen Imidazolverbindungen - vorzugsweise im Bereich von 0,1 bis 10 Gew.-Teile, insbesondere von 0,5 bis 5 Gew.-Teile, bevorzugt von 1 bis 3 Gew.-Teile, jeweils bezogen auf 100 Gew.-Teile des/der zu härtenden Epoxidharze(s) - insbesondere wenn das beziehungsweise die erfindungsgemäße(n) Imidazolverbindung(en) als Beschleuniger - beispielsweise in Kombination mit Imidazolverbindungen, die keine erfindungsgemäßen Imidazolverbindungen sind - eingesetzt werden. In einigen Fällen - vor allen Dingen, wenn die erfindungsgemäße Imidazolverbindung ein etwas schwächerer Beschleuniger ist - werden vorteilhaft Mengen im Bereich von 4 - 8 Gew.-Teile verwendet.

Um auch bei erhöhten Temperaturen - beispielsweise bei 60 °C - besonders lagerfähige Reaktivklebstoffe zu erhalten (Lagerfähigkeit etwa bestimmbar nach der Lagerzeit-Methode), hat sich überraschenderweise gezeigt, dass es entgegen den Erwartungen nicht ausreicht, Härter beziehungsweise Beschleuniger nur danach auszuwählen, dass deren Erweichungspunkt oberhalb der Lagertemperatur liegt. So lassen sich häufig Systeme, deren Erweichungspunkt oberhalb der Lagertemperatur liegt, zwar verarbeiten, zeigen aber dennoch schlechte Lagerfähigkeiten im betreffenden Temperaturbereich Beispielsweise zeigen Systeme mit einem Erweichungspunkt nach MSDS von 70 °C Erweichungspunkt (Intelimer 7004) oder von sogar 89 °C (Epikure P-101) relativ schlechte Lagerfähigkeiten bei 60 °C: $L_f60 < 30\%$.

Aus diesem Grund sind in einer besonders bevorzugten Ausführungsform solche erfindungsgemäßen Imidazolverbindungen bevorzugt, die einen Erweichungspunkt von größer/gleich 100 °C aufweisen (Erweichungspunkt bestimmt mit einem Schmelzpunktanalysator).

In besonders bevorzugter Form wird die erfindungsgemäße Imidazolverbindung, beziehungsweise werden bei Anwesenheit mehrerer erfindungsgemäßer Imidazolverbindungen alle erfindungsgemäßen Imidazolverbindungen, in partikulärer Form eingesetzt. Dies lässt sich beispielweise dadurch realisieren, dass die erfindungsgemäße Imidazolverbindung in der härtbaren Zusammensetzung dispergiert vorliegt, insbesondere in keiner anderen Komponente des Klebebandes löslich ist, insbesondere nicht einmal teillöslich ist.

Der Einsatz des (Co-)Härters in ungelöster beziehungsweise partikulärer Form führt zu einem zumindest zweiphasigen System und damit zu einer erhöhten Lagerstabilität der härtbaren Zusammensetzung. Vorteilhaft sollte die Dispersion auch bei deutlich über Raumtemperatur bestehen bleiben, beispielsweise etwa bis mindestens 90 °C, bevorzugt bis 100 °C. Erst bei Erreichen der späteren Härtungstemperatur ist eine Aktivierung des Härtungsreagenzes erforderlich; indem die partikulären Härter teilweise oder vollständig in den gelösten Zustand übergehen.

Überraschenderweise hat sich gezeigt, dass sich erfindungsgemäße Imidazolverbindungen auch thermisch verarbeiten lassen zum Beispiel bei 90 °C, wenn die Viskosität der Klebmasse auch bei dieser hohen Temperatur hoch ist. Eine Annahme ist - ohne sich auf diese Theorie festlegen zu wollen -, dass das unerwünschte vorzeitige Lösen solcher Verbindungen in Reaktivharzen aufgrund der hohen Viskosität verlangsamt ist bzw. unterbunden wird. Als vorteilhaft haben sich Viskositäten der heißen Klebemasse von größer 10 Pa s bei 90 °C, insbesondere größer 100 Pa s gezeigt. Selbst Klebmassen mit Viskositäten von über 1000 Pa s bei 90 °C konnten sowohl im Extruder, als auch im Laborkneter verarbeitet werden und zeigten sehr bevorzugte Lagerfähigkeiten, was auf die überraschende Wechselwirkung zwischen Schmelzviskosität und den modifizierten Imidazol-Beschleunigern zurückgeführt wird. Der Fachmann würde sicherlich niedrigere Viskositäten bevorzugen, da in einem solchen System deutlich weniger Scherkräfte wirken, die die Imidazol-Partikel in Lösung bringen könnten.

(Co-)Härter entsprechend der erfindungsgemäßen Imidazolverbindung weisen zumindest einen Substituenten $R^{Het}$ auf, der in seinem chemischen Aufbau zumindest ein Heteroatom umfasst. Die erfindungsgemäßen Imidazolverbindungen können auch mehr als ein Heteroatom umfassen, wobei diese identisch oder unterschiedlich sein können.

Die erfindungsgemäßen Imidazolverbindungen werden in Form von Imidazol-Säure-Addukten eingesetzt, um die Lagerfähigkeit weiter zu optimieren.

Als Imidazol-Säure-Addukt werden solche durch Bindungen oder Wechselwirkungen verbundenen Konglomerate bezeichnet, die durch geeignete Umsetzungen der betreffenden Imidazolverbindungen mit Carbonsäuren entstehen. Der Begriff ist nicht beschränkt auf kovalente gebildete Addukte. Imidazol-Säure-Addukte können beispielsweise auch ionisch beziehungsweise salzförmig aufgebaut sein, oder das Addukt kann durch andere Wechselwirkungen zwischen Imidazol und Säure entstehen. Die Adduktbildung stabilisiert die Imidazolverbindung insbesondere durch Herabsetzung dessen Reaktivität (etwa durch Blockierung), zur Bewirkung der Härterwirkung wird die herabgesetzte Reaktivität dann wieder erhöht; insbesondere wieder in den Ausgangszustand zurückgeführt. Als Säuren lassen sich vorteilhaft Carbonsäuren einsetzen. Als Beispiele für Carbonsäuren, die zur Herstellung der Imidazol-Säure-Addukte geeignet sind, seien Trimellitsäure und Isocyanaursäure genannt.

Die Addukte können auch vorteilhaft in hydratisierter Form eingesetzt werden, etwa beispielsweise als Imidazol-Säure-Addukt Hydrat oder als Imidazol-Säure-Addukt Dihydrat.

Wie vorstehend bereits ausgeführt sind Beschleuniger solche chemischen Verbindungen, die in zusätzlichem Einsatz zu einem oder mehreren Härtern die Reaktionsgeschwindigkeit der Härtungsreaktion und/oder die Geschwindigkeit der Aktivierung der Härtungsreaktion - im Vergleich zum Ablauf in Abwesenheit des/der Beschleuniger(s) - erhöhen. Dies kann mittels DSC bestimmt werden. So wird der Reaktionspeak durch Zugabe geeigneter Beschleuniger zu niedrigeren Temperaturen verschoben.

Die Klebemasse des erfindungsgemäßen Klebebandes kann erfindungsgemäß einen oder mehrere Beschleuniger enthalten. Ein Beschleuniger bewirkt etwa insbesondere, dass die Starttemperatur für die Vernetzungsreaktion des Reaktivharzes und/oder die Reaktionstemperatur, bei der die Härtungsreaktion fortschreitet, verringert wird. Damit wird die Handhabung bei der Verklebung verbessert. Dabei ist zu beachten, dass die durch die Zugabe eines Beschleunigers gesenkte Starttemperatur als Nachteil mit einer verringerten Lagerstabilität einhergeht, da die Senkung der Starttemperatur auch eine ungewünschte erhöhte Reaktion während der Lagerung bewirkt. Trotzdem sind die erfindungsgemäßen Klebebänder in ihrer Lagerstabilität den mit Epoxidklebstoffen getränkten Prepregs des Standes der Technik weit überlegen. Will man den genannten Effekt jedoch vermeiden, kann auf Beschleuniger auch ganz verzichtet werden.

Als Beschleuniger können grundsätzlich und erfindungsgemäß besonders vorteilhaft die Verbindungen eingesetzt werden, wie sie vorstehend als Härter beschrieben werden; die dort gemachten Ausführungen sind entsprechend übertragbar. Bei der Wahl des Beschleunigers wird dessen Reaktivität insbesondere vorteilhaft mit derjenigen des beziehungsweise der eingesetzten Härter(s) abgestimmt, um den Beschleunigereffekt zu erzielen. So kann etwa der Härter beziehungsweise können die Härter derart ausgewählt werden, dass die Härtungsreaktion möglichst effektiv und/oder vollständig abläuft, während der Beschleuniger beziehungsweise die Beschleuniger derart gewählt ist beziehungsweise sind, dass die Reaktionsgeschwindigkeit und/oder die Geschwindigkeit der Aktivierung erhöht sind, insbesondere die Reaktionstemperatur der Härtung und/oder die Starttemperatur der Härtungsreaktion gesenkt werden.

In einer weiteren Ausführungsvariante der Erfindung umfasst das Härtungsreagenz - zusätzlich zu der bzw. den erfindungsgemäßen Imidazol-Verbindung(en) - einen oder mehrere Härter für die Epoxidharze und/oder einen oder mehrere Beschleuniger für die Härtungsreaktion der Epoxidharze, wobei diese Härter beziehungsweise Beschleuniger keine erfindungsgemäßen Imidazol-Verbindungen sind.

Als solche zusätzlichen Härter beziehungsweise Beschleuniger können insbesondere vorteilhaft Verbindungen aus der folgenden Liste aus Dicyandiamid, Anhydriden, Epoxy-Amin-Addukten, Hydraziden und Reaktionsprodukten aus Disäuren und multifunktionellen Aminen gewählt werden. Als Reaktionsprodukte aus Disäuren und multifunktionellen Aminen kommen beispielsweise Reaktionsprodukte aus Phthalsäure und Diethylentriamin in Betracht.

In einer sehr bevorzugten Ausführung der Erfindung umfasst das Härtungsreagenz Dicyandiamid sowie eine oder mehrere erfindungsgemäße Imidazolverbindungen. Noch weiter bevorzugt besteht das Härtungsreagenz ausschließlich aus Dicyandiamid sowie einer oder mehreren erfindungsgemäßen Imidazolverbindungen. In Kombination mit Dicyandiamid übernimmt die eine erfindungsgemäße Imidazolverbindung, oder bei Anwesenheit mehrerer erfindungsgemäßer Imidazolverbindungen zumindest eine der erfindungsgemäßen Imidazolverbindungen, üblicherweise die Wirkung eines Beschleunigers, erhöht also die Reaktionsgeschwindigkeit der Härtungsreaktion des Epoxidharzes vergleichen mit der Situation, bei der Dicyandiamid als einzige Komponente des Härtungsreagenzes vorliegen würde.

Gegenstand der Erfindung ist somit weiterhin ein Klebeband umfassend zumindest eine Schicht einer haftklebrigen Klebemasse, wobei die Klebemasse eine polymere Filmbildner-Matrix sowie eine härtbare Zusammensetzung umfasst, wobei die härtbare Zusammensetzung zumindest ein Epoxidharz sowie zumindest ein Härtungsreagenz für das Epoxidharz umfasst, und wobei das Härtungsreagenz i) zumindest eine erfindungsgemäße Imidazolverbindung und ii) Dicyandiamid umfasst oder hieraus besteht. Stöchiometrische Härter wie beispielsweise Dicyandiamid werden bevorzugt auf die Epoxidmenge des Klebstoffes bezogen eingesetzt. Dazu wird zunächst der EEW der Epoxidmischung nach folgender Formel berechnet:

$$EEW_{ges} = m_{ges} \Big/ \sum \frac{m_i}{EEW_i}$$

wobei

$m_{ges}$ = Summe $m_i$
$m_i$ Massen der einzelnen Komponenten i der Mischung
$EEW_i$ = Epoxyäquivalente der Komponenten i

Die Härtermenge $m_H$ ergibt sich dann aus dem Aminäquivalent des Härters (AEW) und dem $EEW_{ges}$ der Epoxidmischung wie folgt:

$$m_H = AEW * ( m_i / EEW_{ges} )$$

Die als Beschleuniger wirkende(n) erfindungsgemäßen Imidazolverbindung(en) wird/werden dann vorteilhaft von 0,1 bis 10 Gew.-Teile, insbesondere von 0,5 bis 5 Gew.-Teile, bevorzugt von 1 bis 3 Gew.-Teile eingesetzt, jeweils bezogen auf 100 Gew.-Teile des zu härtenden Epoxidharzes. In einigen Fällen - vor allen Dingen, wenn die erfindungsgemäße Imidazolverbindung ein etwas schwächerer Beschleuniger ist - werden Mengen im Bereich von 4 - 8 Gew.-Teile verwendet.

Sofern zusätzlich zu den Epoxidharzen andere Reaktivharze in der härtbaren Zusammensetzung zugegen sind, können weiterhin auch spezielle Härter und/oder Beschleuniger zur Reaktion mit diesen Komponenten zugegeben sein.

Epoxidharze

Als Epoxidharz(e) der härtbaren Zusammensetzung kann ein einziges Epoxidharz oder eine Mischung von Epoxidharzen eingesetzt werden. Grundsätzlich können bei Raumtemperatur flüssige Epoxidharze oder bei Raumtemperatur feste Epoxidharze oder Mischungen hiervon eingesetzt werden.

Vorzugsweise ist das eine Epoxidharz oder mindestens eines der Epoxidharze ein Feststoff; insbesondere ein solcher mit einer Erweichungstemperatur von mindestens 45 °C oder ein solcher mit einer Viskosität bei 25 °C von mindestens 20 Pa s, bevorzugt 50 Pa s, insbesondere mindestens 150 Pa s (gemessen nach DIN 53019-1; 25 °C, Schergeschwindigkeit 1 x $s^{-1}$).

In einer günstigen Ausführung des erfindungsgemäßen Klebebandes umfassen die Epoxidharze eine Mischung von bei 25 °C flüssigen und bei 25 °C festen Epoxidharzen. Der Anteil der flüssigen Epoxidharze an den Epoxidherzen (E) liegt insbesondere bei 10 bis 90 Gew.-%, weiter bevorzugt bei 20 bis 75 Gew.-%. Die jeweilige Differenz auf 100 Gew.-% der Epoxidharze ist dann durch feste Epoxidharze gegeben. Klebebänder mit solchen Verhältnissen aus flüssigen und festen Epoxid-Komponenten zeigen im unausgehärteten Zustand besonders ausgewogene Klebeigenschaften. Wird ein Klebeband mit besonders guten Auffließeigenschaften gewünscht, so ist der Anteil an flüssigen Epoxidkomponenten bevorzugt 50 bis 80 Gew.-%. Für Anwendungen, bei denen die Klebebänder bereits im unausgehärteten Zustand eine höhere Last tragen müssen, ist ein Anteil von 15 bis 45 Gew.-% besonders bevorzugt. Es kann ein solches Harz oder auch eine Mischung verschiedener Harze eingesetzt werden.

Weiter bevorzugt umfassen die Epoxidharze wenigstens zwei unterschiedliche Epoxidharze (E-1) und (E-2), von denen

a. das erste Epoxidharz (E-1) bei 25 °C eine dynamische Viskosität von weniger als 500 Pa*s aufweist, gemessen nach DIN 53019-1 bei einer Messtemperatur von 25 °C und einer Schergeschwindigkeit 1 x $s^{-1}$, und

   a. von denen das zweite Epoxidharz (E-2) eine Erweichungstemperatur von wenigstens 45 °C oder bei 25 °C eine dynamische Viskosität von wenigstens 1000 Pa*s aufweist, gemessen nach DIN 53019-1 bei einer Messtemperatur von 25 °C und einer Schergeschwindigkeit 1 x $s^{-1}$,

wobei insbesondere der Anteil des ersten Epoxidharzes (E-1) 10 bis 90 Gew.-%, bevorzugt 20 bis 75 Gew.-% und der Anteil des zweiten Epoxidharzes (E-2) 10 bis 90 Gew.-%, bevorzugt 25 bis 80 Gew.-% beträgt, bezogen auf die Gesamtheit an Epoxidharzen. Vorteilhaft besteht die Epoxidharz-Komponente aus diesen beiden Epoxidharze (E-1) und (E-2), so dass sich der Anteil der beiden Epoxidharze (E-1) und (E-2) am gesamten Epoxidharz zu 100 Gew.-% addieren.

Besonders gute Haftklebstoffe werden erhalten, wenn der Anteil von Epoxidharz (E2) im Bereich von 40 bis 80 Gew.-%, insbesondere 60 bis 75 Gew.-% ist. In einer speziellen Ausführungsform ist der Anteil an Epoxidharzen (E-2), die eine Erweichungstemperatur von wenigstens 45 °C haben, mindestens 35 Gew.-%, insbesondere im Bereich 40 bis 70 Gew.-%.

Die Kohäsion der unvernetzten Haftklebstoffe bei trotzdem ausreichender Haftklebrigkeit ist besonders gut, wenn der Anteil an Epoxidharzen mit einer Erweichungstemperatur von wenigstens 45 °C mindestens 15 Gew.-% beträgt, insbesondere im Bereich von 20 Gew.-% bis 75 Gew.-% liegt, bezogen auf das gesamte Epoxidharz. Das Auffließverhalten wird verbessert, wenn weniger als 55 Gew.-%, insbesondere zwischen 25 Gew.-% und 45 Gew.-% enthalten sind.

Als Epoxidharz oder als ein Teil der Gesamtheit der Epoxidharze vorteilhaft einzusetzende Epoxidharze sind beispielsweise elastomermodifizierte Epoxidharze, silanmodifizierte Epoxidharze oder fettsäuremodifizierte Epoxidharze.

Als elastomermodifizierte Epoxidharze im Sinne der vorliegenden Erfindung sind - insbesondere flüssige, in der Regel hochviskose - Epoxidharze mit einer mittleren Funktionalität von mindestens zwei und einem Elastomergehalt von bis zu 50 Gew.-%, vorzugsweise mit einem solchen von 5 - 40 Gew.-%, zu verstehen. Die Epoxid-gruppen können endständig und/oder in der Seitenkette des Moleküls angeordnet sein. Der elastomere Strukturanteil dieser flexibilisierten

Epoxidharze besteht aus Polyenen, Dienmischpolymeren und Polyurethanen, vorzugsweise aus Polybutadien, Butadien-Styrol- oder Butadien-Acrylnitril-Mischpolymeren.

Ein durch Butadien-Acrylnitril-Copolymere (Nitrilkautschuk) modifizierte Epoxidharz ist beispielweise ein Epoxid-Vorpolymer, das durch Modifizierung eines Epoxidharzes, mit mindestens zwei Epoxidgruppen in den Molekülen, mit einem Nitrilkautschuk erhalten wird. Als Epoxidbasis wird vorteilhaft ein Reaktionsprodukt aus Glycerin oder Propylenglycol und einer halogenhaltigen Epoxidverbindung, wie Epichlorhydrin, oder das Reaktionsprodukt aus einem mehrwertigen Phenol, wie Hydrochinon, Bisphenol-A, und einem halogenhaltigen Epoxid verwendet. Wünschenswert ist ein Reaktionsprodukt aus einem Epoxidharz vom Bisphenol-A-Typ mit zwei endständigen Epoxidgruppen.

Zum Anbinden der Epoxidharze kann im Falle von Butadien-Polymeren oder Butadien-Acrylnitril-Copolymeren (sogenannte Nitrilkautschuke) ein drittes Monomer mit Säurefunktion - zum Beispiel Acrylsäure - mit einpolymerisiert werden.

Aus der Säure und den Nitrilkautschuken werden sogenannte carboxy-terminierte-Nitrilkautschuke (CTBN) erhalten. In der Regel enthalten diese Verbindungen nicht nur an den Enden, sondern auch entlang der Hauptkette Säuregruppen. CTBN werden beispielweise unter dem Handelsnamen Hycar von der Firma B. F. Goodrich angeboten werden. Diese haben Molmassen zwischen 2000 und 5000 und Acrylnitrilgehalte zwischen 10 % und 30 %. Konkrete Beispiele sind Hycar CTBN 1300 x 8, 1300 x 13 oder 1300 x 15. Entsprechend verläuft die Reaktion mit Butadien-Polymeren.

Durch Reaktion von Epoxidharzen mit CTBN werden sogenannte epoxy-terminierte-Nitrilkautschuke (ETBN) erhalten, die für diese Erfindung besonders bevorzugt verwendet werden. Kommerziell sind solche ETBN beispielsweise von der Firma Emerald Materials unter dem Namen HYPRO ETBN (vorher Hycar ETBN) - wie beispielsweise Hypro 1300X40 ETBN, Hypro 1300X63 ETBN und Hypro 1300X68 ETBN - erhältlich.

Ein Beispiel für einen epoxy-terminierten Butadienkautschuk ist Hypro 2000X174 ETB.

Weitere Beispiele für elastomer-modifizierte epoxy-funktionale Verbindungen sind ein Reaktionsprodukt eines Diglycidylethers von Neopentylalkohol und eines Butadien/Acrylnitril-Elastomers mit Carboxylenden (zum Beispiel EPONTM Resin 58034 von Resolution Performance Products LLC), ein Reaktionsprodukt eines Diglycidylethers von Bisphenol-A und eines Butadien/Acrylnitril-Elastomers mit Carboxylenden (zum Beispiel EPONTM Resin 58006 von Resolution Performance Products LLC), ein Butadien/Acrylnitril-Elastomer mit Carboxylenden (zum Beispiel CTBN-1300X8 und CTBN-1300X13 von Noveon, Inc., Cleveland, Ohio) und ein Butadien/Acrylnitril-Elastomer mit Aminenden (zum Beispiel ATBN-1300X16 und ATBN-1300X42 von Noveon, Inc.). Ein Beispiel für das elastomer-modifizierte Epoxidharzaddukt ist das Reaktionsprodukt eines Epoxidharzes auf Bisphenol-F-Basis und eines Butadien/Acrylnitril-Elastomers mit Carboxylenden (zum Beispiel EPONTM Resin 58003 von Resolution Performance Products LLC).

Der Anteil der elastomermodifizierten Epoxidharze bezogen auf die Gesamtmenge an Epoxidharzen in der härtbaren Zusammensetzung kann zwischen 0 und 100 % liegen. Für Verklebungen mit besonders hohen Verklebungsfestigkeiten und geringer Dehnung werden eher niedrigere Anteile - wie beispielsweise 0 bis 15 Gew.-% - gewählt. Im Gegensatz dazu werden Klebstoffe mit hohen Dehnungswerten erhalten, wenn der Anteil größer 40 Gew-%, insbesondere größer 60 Gew.-% ist. Für viele Anwendungen ist ein ausgewogenes Verhältnis zwischen Verklebungsfestigkeit und Dehnung gewollt. Hier sind Anteile zwischen 20 bis 60 Gew.-%, insbesondere 30 bis 50 Gew.-% bevorzugt. Je nach Anforderungsprofil kann es auch vorteilhaft sein, Klebstoffe mit einem Anteil bis 100 % zu realisieren.

Als weitere geeignete Vertreter für die Epoxidharze können sehr vorteilhaft silanmodifizierte Epoxidharze eingesetzt werden. Dabei können ein einzelnes silanmodifiziertes Epoxidharz oder zwei, drei oder auch mehrere silanmodifizierte Epoxidharze in der härtbaren Zusammensetzung zugegen sein. Die härtbare Zusammensetzung kann auf das beziehungsweise die silanmodifizierbaren Epoxidharze als härtbare Reaktivharze beschränkt sein. Neben dem beziehungsweise den Epoxidharzen können aber auch weitere Epoxidharze zugegen sein, die nicht silanmodifiziert sind - beispielwiese elastomermodifizierte, insbesondere nitrilkautschukmodifizierte - Epoxidharze und/oder fettsäuremodifizierte Epoxidharze, wie im Einzelnen in dieser Schrift näher ausgeführt - , und/oder auch Reaktivharze, die keine Epoxidharze sind.

Ist ein einziges silanmodifiziertes Epoxidharz zugegen, so kann dieses insbesondere ausgewählt werden aus den nachfolgend als bevorzugt beschriebenen silanmodifizierten Epoxidharzen. Sind mehrere silanmodifizierte Epoxidharze zugegen, so ist vorteilhaft zumindest eines der Epoxidharze eines der im Folgenden als bevorzugte silanmodifizierten Epoxidharze beschriebenen Verbindungen. Weiter bevorzugt sind alle silanmodifizierten Epoxidharze solche, wie sie im Folgenden als bevorzugt beschrieben sind.

Die chemische Modifizierung von Epoxidharzen kann zur Steuerung der Eigenschaften von Klebstoffen genutzt werden. Erfindungsgemäße modifizierte Epoxidharze sind insbesondere ausgewählt aus silanmodifizierten Epoxidharzen. Silangruppenmodifizierte Epoxidharze sind solche Epoxidharze, an die eine oder mehrere Silangruppen chemisch gebunden sind.

Prinzipiell gibt es verschiedene Wege, Silangruppen chemisch an Epoxidharze zu binden.

In einer bevorzugten Vorgehensweise wird als Epoxidharz ein solches silanmodifiziertes Epoxidharz eingesetzt,

das durch Dealkoholisierungs-Kondensationsreaktion zwischen einem Bisphenol-Epoxidharz und einem hydrolysierbaren Alkoxysilan erhältlich ist. Derartige Epoxidharze sind beispielsweise in der EP 1114834 A beschrieben, deren Offenbarungsgehalt durch Referenz in die vorliegende Schrift einbezogen sein soll.

Das Bisphenol-Epoxidharz kann in vorteilhafter Weise derart gewählt werden, dass es ein Epoxy-Äquivalentgewicht von mehr als 180 g/eq, und bevorzugt von weniger als 5000 g/eq, hat. Für Epoxidharze oder Epoxid-Vernetzer ist das Epoxid-Äquivalentgewicht (Abkürzung EEW) eine charakteristische und wichtige Größe. Nach DIN EN ISO 3001:1999-11 gibt das Epoxid-Äquivalentgewicht den pro Epoxid-Gruppe verbundenen Festkörper des betreffenden Stoffes in Gramm an. Es werden bevorzugt Epoxidharze mit einem EEW > 180 g/eq eingesetzt, da sonst gegebenenfalls nicht ausreichend Hydroxygruppen für die Kondensationsreaktion mit den Alkoxysilanen vorhanden sind.

In bevorzugter Weise werden als Bisphenol-Epoxidharz zur Reaktion mit dem hydrolysierbaren Alkoxysilan Verbindungen entsprechend der folgenden Formel

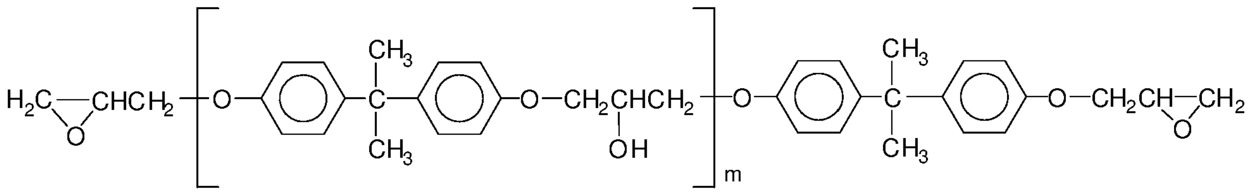

eingesetzt. In der Regel handelt es sich dabei um eine Mischung entsprechender Verbindungen der vorstehenden Bisphenol-Epoxidharz-Formel mit variierender Wiederholungszahl m der Einheit in der eckigen Klammer. Dabei wird das Bisphenol-Epoxidharz insbesondere derart gewählt, dass der Durchschnitt von m 0,07 bis 16,4, ist die zahlenmittleren Molmassen also zwischen etwa 350 g/mol und 4750 g/mol liegen.

In weiter bevorzugter Weise ist das hydrolysierbare Alkoxysilan entweder eine Verbindung entsprechend der allgemeinen Formel

$$R^X{}_pSi(OR^Y)_{4-p}$$

wobei p 0 oder 1 ist, $R^X$ eine C-C Alkylgruppe, eine Arylgruppe oder eine ungesättigte aliphatische Kohlenwasserstoffgruppe ist, die eine direkt an ein Kohlenstoffatom gebundene funktionelle Gruppe aufweisen kann, $R^Y$ ein Wasserstoffatom oder eine Niederalkylgruppe darstellt, und die Reste $R^Y$ gleich oder verschieden sein können, oder das hydrolysierbare Alkoxysilan ist ein partielles Kondensat der genannten Verbindung. Die direkt an ein Kohlenstoffatom gebundene funktionelle Gruppe kann beispielsweise eine Vinylgruppe, Mercaptogruppe, Epoxygruppe, Glycidoxygrupppe usw. sein. Die Niederalkylgruppe kann beispielsweise eine unverzweigte oder eine verzweigte Alkylgruppe mit 6 oder weniger Kohlenstoffatomen sein.

Beispiele des hydrolysierbaren Alkoxysilans umfassen Tetramethoxysilan, Tetraethoxysilan, Tetrapropoxysilan, Tetraisopropoxysilan, Tetrabuthoxysilan und ähnliche Tetraalkoxysilane; Methyltrimethoxysilan, Methyltriethoxysilan, Methyltripropoxysilan, Methyltributhoxysilan, Ethyltrimethoxysilan, Ethyltriethoxysilan, n-Propyltrimethoxysilan, n-Propyltriethoxysilan, Isopropyltrimethoxysilan, Isopropyltriethoxysilan, Vinyltrimethoxysilan, Vinyltriethoxysilan, 3-Glycidoxypropyltrimethoxysilan, 3-Glycidoxypropyltriethoxysilan, 3-Mercaptopropyltrimethoxy-silan, 3-Mercaptopropyltriethoxysilan, Phenyltrimethoxysilan, Phenyltriethoxysilan, 3,4-Epoxy-cyclohexylethyltrimethoxysilan, 3,4-Epoxycyclohexylethyltrimethoxysilan und ähnliche Trialkoxysilane; oder partielle Kondensate dieser Verbindungen.

Unter diesen Verbindungen werden Tetramethoxysilan, Tetraethoxysilan und ähnliche Tetraalkoxysilane oder partielle Kondensate davon bevorzugt. Besonders bevorzugt ist Poly(tetramethoxysilan), das ein partielles Kondensat von Tetramethoxysilan ist, dargestellt durch die Formel

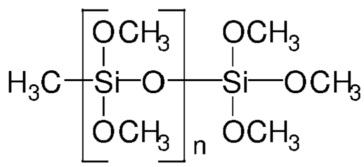

(wobei der Durchschnitt von n 1 bis 7 beträgt). Das Poly(tetramethoxysilan), das durch die vorstehende Formel dargestellt ist, kann ein Molekül enthalten, in dem n 0 ist, soweit der Durchschnitt von n 1 oder größer ist. Die zahlenmittlere Molmasse des Poly(tetramethoxysilans) beträgt vorzugsweise etwa 260 bis etwa 1200. Außerdem ist Poly(tetramethoxysilan) im Gegensatz zu Tetramethoxysilan nicht toxisch.

In einer weiteren bevorzugten Vorgehensweise wird als Epoxidharz ein solches silanmodifiziertes Epoxidharz

eingesetzt, das durch Modifizierung von Bisphenol-Diglycidylether mit Alkoxysilanen, die eine Epoxidgruppe tragen, erhältlich ist. Derartige silanmodifizierte Epoxide sowie deren Herstellungsverfahren ist in der US 8,835,574 A beschrieben, deren Offenbarungsgehalt ebenfalls per Referenz in diese Schrift einbezogen wird. Bei dem dort geschilderten Verfahren wird zunächst das Epoxy-Alkoxysilan in Gegenwart von Wasser teilhydrolysiert und teilkondensiert. In einem zweiten Schritt wird ein Bisphenol-Diglycidylether zugegeben und an das Siloxan-Teilkondensat gebunden.

In einer weiteren Syntheseroute von erfindungsgemäß vorteilhaft einsetzbaren silanmodifizierten Epoxidharzen werden Alkoxysilane, die eine Isocyanatgruppe enthalten, an die aliphatischen Hydroxygruppen unter Ausbildung einer Urethangruppe gebunden.

Der Anteil der silanmodifizierten Epoxidharze bezogen auf die Gesamtmenge an Epoxidharzen in der härtbaren Zusammensetzung kann zwischen 0 und 100 % liegen. Um das Aufziehen auf bestimmte silikonisierte Liner zu reduzieren, werden eher niedrigere Anteile - wie beispielsweise 5 bis 25 % - gewählt. Für eine ausgewogene Performance auch nach Feucht-Wärme-Lagerung haben sich Anteile zwischen 10 bis 50 Gew.-%, insbesondere 20 bis 40 Gew.-% als herausragend gezeigt.

Als Epoxidharze lassen sich erfindungsgemäß weiterhin sehr vorteilhaft fettsäuremodifizierte Epoxide einsetzen.

Als fettsäuremodifizierte Epoxidharze werden bevorzugt Epoxidharzester, auch als Epoxyester bezeichnet, eingesetzt, also die Veresterungsprodukte von Epoxidharzen mit gesättigten oder ungesättigten Fettsäuren.

Es können ein einzelnes fettsäuremodifiziertes Epoxidharz oder zwei, drei oder auch mehrere fettsäuremodifizierte Epoxidharze in der härtbaren Zusammensetzung zugegen sein. Die härtbare Zusammensetzung kann auf das beziehungsweise die fettsäuremodifizierbaren Epoxidharze als härtbare Reaktivharze beschränkt sein. Neben dem beziehungsweise den fettsäuremodifizierten Epoxidharzen können aber auch weitere Epoxidharze zugegen sein, die nicht fettsäuremodifiziert sind - beispielwiese elastomermodifizierte, insbesondere nitrilkautschukmodifizierte - Epoxidharze und/oder silanmodifizierte Epoxidharze, wie im Einzelnen in dieser Schrift näher ausgeführt -, und/oder auch Reaktivharze, die keine Epoxidharze sind.

Ist ein einziges fettsäuremodifiziertes Epoxidharz zugegen, so kann dieses insbesondere ausgewählt werden aus den nachfolgend als bevorzugt beschriebenen fettsäuremodifizierten Epoxidharzen. Sind mehrere fettsäuremodifizierte Epoxidharze zugegen, so ist vorteilhaft zumindest eines der Epoxidharze eines der im Folgenden als bevorzugte fettsäuremodifizierten Epoxidharze beschriebenen Verbindungen. Weiter bevorzugt sind alle fettsäuremodifizierten Epoxidharze solche, wie sie im Folgenden als bevorzugt beschrieben sind.

Die chemische Modifizierung von Epoxidharzen kann zur Steuerung der Eigenschaften von Klebstoffen genutzt werden. Erfindungsgemäße modifizierte Epoxidharze sind insbesondere ausgewählt aus fettsäuremodifizierten Epoxidharzen. Fettsäuregruppenmodifizierte Epoxidharze sind solche Epoxidharze, an die eine oder mehrere Fettsäuren insbesondere durch Veresterungsreaktionen chemisch gebunden sind.

Als Epoxidharz-Basis für die fettsäuremodifizierten Epoxidharze, insbesondere Epoxyester, können insbesondere Epoxidharze vom Typ Bisphenol A/Epichlorhydrin entsprechend der oben bereits eingeführten allgemeinen Formel

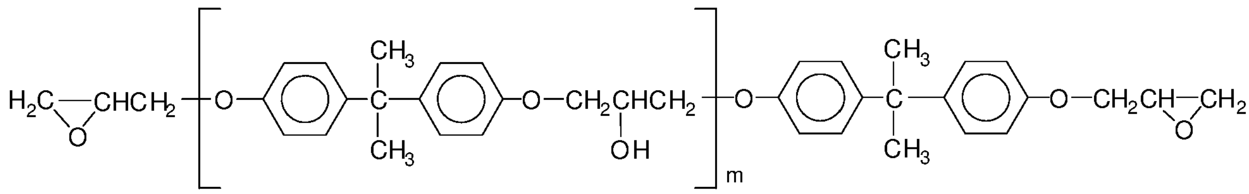

dienen. Als Basis für die fettsäuremodifizierten Epoxide wird das Bisphenol-Epoxidharz der vorstehenden Formel insbesondere derart gewählt, dass der Durchschnitt von m = 0,07 bis 16,4 ist, die zahlenmittleren Molmassen also zwischen etwa 350 g/mol und 4750 g/mol liegen. Besonders bevorzugt werden Verbindungen der Formel 1 mit m = 2,3 bis m = 10 in reiner Form (mit ganzzahligen Werten für m) oder in Form von Mischungen eingesetzt (entsprechend zahlenmittlerer Molmassen zwischen etwa 1000 und etwa 3000 g/mol) .

Sowohl die terminalen Epoxidgruppen, als auch die sekundären Hydroxygruppen von Bisphenol-basierten Epoxidharzen können mit Fettsäuren reagieren. Bei der Veresterung werden üblicherweise zunächst die beiden Epoxid-Ringe geöffnet, dann erfolgt die Reaktion der Hydroxy-Gruppen.

Hierbei ist jede Epoxygruppe äquivalent zu 2 Hydroxygruppen, da nach der Reaktion einer Säuregruppe mit einem Epoxid ein β-Hydroxyester entsteht. Diese β-Hydroxygruppen können auch mit Fettsäuren reagieren. Die Herstellung erfolgt typischerweise bei Temperaturen von 240 - 260°C unter Schutzgasatmosphäre, bevorzugt unter azeotropen Bedingungen, um das freiwerdende Reaktionswasser zu entfernen. Optional wird die Reaktion durch Zugabe von Katalysatoren wie beispielsweise Calcium oder Zinkseifen von zum Beispiel Fettsäuren wie Stearinsäure beschleunigt. Je nach gewünschter Eigenschaft werden 40 bis 80 % der verfügbaren funktionellen Gruppen des Epoxidharzes mit Fettsäuren umgesetzt.

Ein Epoxidharz vom Typ n (entspricht der Anzahl freier OH-Gruppen entlang der Kette) kann im Mittel theoretisch maximal n + 4 Fettsäure-Moleküle pro Epoxidharz-Molekül binden (Veresterungsgrad 100%). Demgemäß ist bei Epoxidharzestern die "Öllänge" wie folgt definiert:

kurzölig: Veresterungsgrad 30-50 %;
mittelölig: Veresterungsgrad 50-70%;
langölig: Veresterungsgrad 70-90%.

Als Fettsäuren für die Veresterung sind beispielsweise Kokosölfettsäure, Ricinenfettsäure (Fettsäure des dehydratisierten Ricinusöls), Leinölfettsäure, Sojaölfettsäure oder Tallölfettsäure erfindungsgemäß gut geeignet.

Weitere erfindungsgemäß vorteilhafte Fettsäuren sind $\alpha$-Linolensäure, Stearidonsäure, Eicosapentaensäure, Docosahexaensäure, Linolsäure, $\gamma$-Linolensäure, Dihomogammlinolen-säure, Arachidonsäure, Docosa-7,10,13,16-tetrain-1-Säure, Palmitoleinsäure, Vaccensäure, Ölsäure, Elaidinsäure, Gadoleinsäure, 13-Eicosensäure, Erucasäure, Nervonsäure, Stearinsäure, Mead'sche Säure.

Auch Dimere und Oligomere von ungesättigten Fettsäuren sind einsetzbar, beispielweise die Dimeren von Tallölfettsäuren.

Der Anteil der fettsäuremodifizierten Epoxidharze bezogen auf die Gesamtmenge an Epoxidharzen in der härtbaren Zusammensetzung kann zwischen 0 und 100 % liegen. Für Verklebungen mit besonders hohen Verklebungsfestigkeiten auch bei hohen Temperaturen werden eher niedrigere Anteile - wie beispielsweise 5 bis 25 Gew.-% - gewählt. Für eine gute Performance auch nach Feucht-Wärme-Lagerung haben sich Anteile zwischen 10 bis 50 Gew.-%, insbesondere 20 bis 40 Gew.-% als herausragend gezeigt.

Herstellverfahren

Die erfindungsgemäß eingesetzten Klebemassen lassen sich grundsätzlich nach den dem Fachmann bekannten Verfahren herstellen.

Als ein sehr schonendes Verfahren, mit dem sich selbst schwierig verarbeitbare Rohstoffe wie nicht-thermoplastische Elastomere - beispielsweise Nitrilkautschuke - verarbeiten lassen, ist die Extrusion, insbesondere unter Verwendung eines Planetwalzenextruders, zu nennen. Hiermit gelingt selbst die Einarbeitung der sensiblen Komponenten der härtbaren Zusammensetzung, wie Reaktivharze und Härter, ohne dass es zu einer Vorab-Reaktion dieser Komponenten oder zu sonstigen Problemen im Prozess kommt. Eine solche Vorab-Reaktion würde das Klebeband bereits härten oder zumindest teilhärten und dem Ziel eines lagerfähigen, transportablen Klebebandes, das erst nach Applikation ausgehärtet werden soll, entgegenstehen.

Planetwalzenextruder als kontinuierlich arbeitendes Aggregat sind seit längerer Zeit bekannt und fanden zuerst Einsatz in der Verarbeitung von Thermoplasten wie zum Beispiel PVC, wo sie hauptsächlich zum Beschicken der Folgeeinheiten wie zum Beispiel Kalander oder Walzwerke verwendet wurden. Durch ihren Vorteil der großen Oberflächenerneuerung für Material- und Wärmeaustausch, mit dem sich die über Friktion eingebrachte Energie rasch und effektiv abführen lässt, sowie der geringen Verweilzeit und des engen Verweilzeitspektrums hat sich ihr Einsatzgebiet in letzter Zeit **u.a.** auch auf Compoundierprozesse erweitert, die eine besonders temperaturkontrollierte Fahrweise erfordern.

Planetwalzenextruder bestehen aus mehreren Teilen, nämlich einer umlaufenden Zentralspindel, einem die Zentralspindel im Abstand umgebenden Gehäuse mit einer Innenverzahnung und Planetspindeln, welche in dem Hohlraum zwischen Zentralspindel und innen verzahntem Gehäuse wie Planeten um die Zentralspindel umlaufen. Soweit im Folgenden von einer Innenverzahnung des Gehäuses gesprochen wird, so schließt das auch ein mehrteiliges Gehäuse mit einer Buchse ein, welches die Innenverzahnung des Gehäuses bildet. Im Planetwalzenextruder kämmen die Planetspindeln sowohl mit der Zentralspindel als auch mit dem innen verzahnten Gehäuse. Zugleich gleiten die Planetspindeln mit dem in Förderrichtung weisenden Ende an einem Anlaufring. Die Planetwalzenextruder besitzen im Vergleich zu allen anderen Extruderbauarten eine extrem gute Mischwirkung, jedoch eine viel geringere Förderwirkung.

Planetwalzenextruder gibt es je nach Hersteller in verschiedenen Ausführungen und Größen. Je nach gewünschter Durchsatzleistung liegen die Durchmesser der Walzenzylinder typischerweise zwischen 70 mm und 400 **mm.**

Planetwalzenextruder haben in der Regel einen Füllteil und einen Compoundierteil.

Der Füllteil, in der Regel entsprechend einer Füllzone, besteht aus einer Förderschnecke, auf die sämtliche Feststoffkomponenten - vorliegenden insbesondere die nicht-thermoplastischen Elastomere und gegebenenfalls weitere Komponenten - kontinuierlich dosiert werden. Die Förderschnecke übergibt das Material dann dem Compoundierteil. Der Bereich des Füllteils mit der Schnecke ist vorzugsweise gekühlt, um Anbackungen von Materialien auf der Schnecke zu vermeiden. Es gibt aber auch Ausführungsformen ohne Schneckenteil, bei denen das Material direkt zwischen Zentral- und Planetenspindeln aufgegeben wird. Für die Wirksamkeit des erfindungsgemäßen Verfahrens ist dies aber nicht von

Bedeutung. Auch die Zentralspindel kann vorzugsweise gekühlt sein.

Der Compoundierteil besteht üblicherweise aus einer angetriebenen Zentralspindel und mehreren Planetenspindeln, die innerhalb eines Walzenzylinders mit Innenschrägverzahnung um die Zentralspindel umlaufen. Die Drehzahl der Zentralspindel und damit die Umlaufgeschwindigkeit der Planetenspindeln kann variiert werden und ist damit ein wichtiger Parameter zur Steuerung des Compoundierprozesses. Der Compoundierteil kann durch eine einzige Compoundierzelle oder durch eine Abfolge mehrerer - insbesondere durch Anlaufringe und gegebenenfalls zusätzliche Einspritz- oder Dispergierringe - voneinander getrennter Compoundierzonen gebildet werden. Zahl und Anordnung der Planetenspindeln kann dabei von Compoundierzone zu Compoundierzone variieren. Typischerweise wird der Compoundierteil vorzugsweise zumindest aus zwei, besonders bevorzugt aber aus drei oder vier gekoppelten Walzenzylindern bestehen, wobei jeder Walzenzylinder einen oder mehrere separate Temperierkreise aufweisen kann.

Das umgebende Gehäuse hat in zeitgemäßer Ausbildung einen Doppelmantel. Der Innenmantel wird durch eine Buchse, die mit der Innenverzahnung versehen ist, gebildet. Zwischen Innen- und Außenmantel ist die wichtige Kühlung des Planetwalzenextruders vorgesehen.

Die Planetenspindeln bedürfen keiner Führung in Umfangsrichtung. Durch die Verzahnung ist gewährleistet, dass der Abstand der Planetenspindeln in Umfangsrichtung gleich bleibt. Es kann von einer Eigenführung gesprochen werden

Die Materialien werden zwischen Zentral- und Planetenspindeln beziehungsweise zwischen Planetenspindeln und Schrägverzahnung des Walzenteils umgewälzt, so dass unter Einfluss von Scherenergie und äußerer Temperierung die Dispergierung der Materialien zu einem homogenen Compound erfolgt.

Die Anzahl der in jedem Walzenzylinder umlaufenden Planetenspindeln kann variiert und somit den Erfordernissen des Prozesses angepasst werden. Die Spindelanzahl beeinflusst das freie Volumen innerhalb des Planetwalzenextruders, die Verweilzeit des Materials im Prozess und bestimmt zudem die Flächengröße für den Wärme- und Materialaustausch. Die Anzahl der Planetenspindeln hat über die eingeleitete Scherenergie Einfluss auf das Compoundierergebnis. Bei konstantem Walzenzylinderdurchmesser lässt sich mit größerer Spindelanzahl eine bessere Homogenisier- und Dispergierleistung beziehungsweise ein größerer Produktdurchsatz erzielen. Zum Erzielen eines guten Verhältnisses von Compoundiergüte zu Produktrate sind vorzugsweise mindestens die Hälfte oder sogar mindestens 3/4 der möglichen Anzahl an Planetenspindeln einzusetzen.

Die maximale Anzahl an Planetenspindeln, die sich zwischen Zentralspindel und Walzenzylinder einbauen lässt, ist abhängig vom Durchmesser des Walzenzylinders und vom Durchmesser der verwendeten Planetenspindeln. Bei Verwendung größerer Walzendurchmesser, wie sie zum Erzielen von Durchsatzraten im Produktionsmaßstab notwendig sind, beziehungsweise kleinerer Durchmesser für die Planetenspindeln können die Walzenzylinder mit einer größeren Anzahl an Planetenspindeln bestückt werden. Typischerweise werden bei einem Walzendurchmesser von D=70 mm bis zu sieben Planetenspindeln verwendet, während bei einem Walzendurchmesser von D=200 mm zum Beispiel zehn und bei einem Walzendurchmesser von D=400 mm beispielsweise 24 Planetenspindeln verwendet werden können.

Selbstverständlich kann jeder Walzenzylinder hinsichtlich Anzahl und Art der Planetenspindeln unterschiedlich bestückt sein und so den jeweiligen rezepturiellen und verfahrenstechnischen Anforderungen angepasst sein.

Erfindungsgemäß ist es gelungen, lagerstabile härtbare Zusammensetzungen auf Epoxidbasis zur Verfügung zu stellen, die zur Verwendung als Klebstoffe in Klebebänder hervorragend geeignet sind und mit denen es gelingt, auch sehr dicke Klebebänder zu realisieren. Die hergestellten Produkte weisen eine sehr gute Adhäsion insbesondere zu Glasoberflächen auf. Durch die gewählten Komponenten ist es gelungen, die Löslichkeit der eingesetzten Härter in den anderen Komponenten zu reduzieren oder gänzlich zu vermeiden, wodurch man sehr lagerstabile Produkte erhält, die gut transportierbar und lagerbar sind und auch bei der Anwendung beim Kunden - sogar nach längerer Lagerzeit - ihre volle Verklebungsleistung gewährleisten.

Die Aushärtung der erfindungsgemäßen Klebstoffe beziehungsweise Klebebänder nach Applikation kann vorteilhaft bei Temperaturen zwischen 120 °C und 200 °C für 10 bis 120 Minuten erfolgen. Die exakten Bedingungen richten sich nach dem verwendeten Härter und dem gegebenenfalls verwendeten Beschleuniger und der verwendeten Menge an Beschleuniger. Typischerweise werden Beschleuniger zwischen 0.5 phr und 5 phr eingesetzt, wobei phr sich auf die Menge an verwendeten Epoxidharzen bezieht. Beispielhafte Aushärtebedingungen sind 30 Minuten bei 180 °C, 30 Minuten bei 160 °C, 35 Minuten bei 145 °C, 60 Minuten bei 130 °C, 120 Minuten bei 120 °C.

Erfindungsgemäß können sehr dicke Klebebänder realisiert werden. Die Darreichung an sich hochviskoser Klebstoffe in Form stabiler Filme - etwa durch die Einbettung des Reaktivklebstoffs in eine polymere Filmbildnermatrix - eröffnet mit den erfindungsgemäßen Klebemassen den Zugang zu sehr lagerstabilen Klebefilmen in einer hohen Dimensionsvielfalt.

So ist es möglich, Klebefilme in sehr dünner Form - beispielweise von wenigen μm Dicke - über übliche Klebebanddicken, etwa mit Klebstoffschichten von 25 μm bis zu 100 μm Dicke - wie etwa 50 μm dicken Klebstoffschichten -, bis hin zu Klebebändern mit sehr dicken Klebstoffschichten von über 100 μm, bevorzugt von über 200 μm, sogar von 300 μm oder mehr, 500 mm oder mehr, 1 mm oder mehr bis hin zu Klebmassenschichten im Bereich von einigen Millimetern und sogar Zentimetern anzubieten.

Der allgemeine Ausdruck "Klebeband" umfasst ein Trägermaterial, welches ein- oder beidseitig jeweils zumindest teilweise mit einem Klebstoff versehen ist. Das Trägermaterial umfasst alle flächigen Gebilde, beispielsweise in zwei Dimensionen ausgedehnte Abschnitte, Bänder mit ausgedehnter Länge und begrenzter Breite, Bandabschnitte, Stanzlinge (beispielsweise in Form von Umrandungen oder Begrenzungen einer zu klebenden Anordnung), andere Formkörper, Mehrschichtanordnungen und dergleichen.

Für bestimmte Anwendungen kann es gewünscht sein, dass eine Seite oder beide Seiten des Klebebandes nicht vollständig mit Klebstoff versehen ist beziehungsweise sind, sondern teilweise klebstofffreie Bereiche vorgesehen sind.

Klebebänder, die ein- oder beidseitig mit Klebstoffen beschichtet sind, werden am Ende des Herstellungsprozesses zumeist zu einer Rolle in Form einer archimedischen Spirale aufgewickelt oder kreuzgespult. Um bei doppelseitig klebenden Klebebändern zu verhindern, dass die Klebemassen miteinander in Kontakt kommen, oder um bei einseitig klebenden Klebebändern eine Verklebung der Klebemasse auf dem Träger zu verhindern, können die Klebebänder vor dem Wickeln vorteilhaft ein- oder beidseitig mit einem Liner eingedeckt werden, der zusammen mit dem Klebeband aufgewickelt wird.

Gemäß einer Ausführungsform der Erfindung handelt es sich bei dem langgestreckten Gut um einen Kabelstrang, der ein Bündel aus mehreren Kabeln wie 3 bis 1000 Kabeln, bevorzugt 10 bis 500 Kabeln, insbesondere zwischen 50 und 300 Kabeln umfasst.

Als Träger können alle bekannten Folien und textilen Träger wie Gestricke, Gelege, Bänder, Geflechte, Nadelflortextilien, Filze, Gewebe (umfassend Leinwand-, Köper und Atlasbindung), Gewirke (umfassend Kettenwirkware und Strickware) oder Vliese verwendet werden, wobei unter "Vlies" zumindest textile Flächengebilde gemäß EN 29092 (1988) sowie Nähwirkvliese und ähnliche Systeme zu verstehen sind. Besonders vorteilhaft ist ein Klebeband, bei dem als Träger ein Gewebe, ein Vlies oder ein Gewirke eingesetzt wird. Derartige Träger sind beispielsweise in der WO 2015/004190 A1 beschrieben, auf die hier vollständig Bezug genommen wird.

Des Weiteren können Abstandsgewebe und -gewirke mit Kaschierung verwendet werden. Derartige Abstandsgewebe werden in der EP 0 071 212 B1 offenbart. Abstandsgewebe sind mattenförmige Schichtkörper mit einer Deckschicht aus einem Faser- oder Filamentvlies, einer Unterlagsschicht und zwischen diesen Schichten vorhandene einzelne oder Büschel von Haltefasern, die über die Fläche des Schichtkörpers verteilt durch die Partikelschicht hindurchgenadelt sind und die Deckschicht und die Unterlagsschicht untereinander verbinden.

Als Vliesstoffe kommen besonders verfestigte Stapelfaservliese, jedoch auch Filament-, Meltblown sowie Spinnvliese in Frage, die meist zusätzlich zu verfestigen sind. Als mögliche Verfestigungsmethoden sind für Vliese die mechanische, die thermische sowie die chemische Verfestigung bekannt. Besonders vorteilhaft haben sich Vliese erwiesen, die insbesondere durch ein Übernähen mit separaten Fäden oder durch Vermaschen verfestigt sind. Derartige verfestigte Vliese werden beispielsweise auf Nähwirkmaschinen des Typs "Malimo" der Firma Karl Mayer, ehemals Malimo, hergestellt und sind unter anderem bei der Firma Hoftex Group AG beziehbar.

Als Träger kann weiterhin ein Vlies vom Typ Kunit oder Multiknit verwendet werden. Ein Kunitvlies ist dadurch gekennzeichnet, dass es aus der Verarbeitung eines längsorientierten Faservlieses zu einem Flächengebilde hervorgeht, das auf einer Seite Maschen und auf der anderen Maschenstege oder Polfaser-Falten aufweist, aber weder Fäden noch vorgefertigte Flächengebilde besitzt. Auch ein derartiges Vlies wird beispielsweise auf Nähwirkmaschinen des Typs "Malimo" der Firma Karl Mayer schon seit längerer Zeit hergestellt.

Ein Multiknitvlies ist gegenüber dem Kunitvlies dadurch gekennzeichnet, dass das Vlies durch das beidseitige Durchstechen mit Nadeln sowohl auf der Ober- als auch auf der Unterseite eine Verfestigung erfährt. Als Ausgangsprodukt für ein Multiknit dienen in der Regel ein beziehungsweise zwei nach dem Kunit-Verfahren hergestellte einseitig vermaschte Polfaser-Vlieswirkstoffe. Im Endprodukt sind beide Vliesstoffoberseiten durch Faservermaschungen zu einer geschlossenen Oberfläche geformt und durch nahezu senkrecht stehenden Fasern miteinander verbunden. Die zusätzliche Einbringbarkeit weiterer durchstechbarer Flächengebilde und/oder streufähiger Medien ist gegeben.

Schließlich sind auch Nähvliese als Vorprodukt geeignet, einen erfindungsgemäßen Träger und ein erfindungsgemäßes Klebeband zu bilden. Ein Nähvlies wird aus einem Vliesmaterial mit einer Vielzahl parallel zueinander verlaufender Nähte gebildet. Diese Nähte entstehen durch das Einnähen oder Nähwirken von durchgehenden textilen Fäden. Für diesen Typ Vlies sind Nähwirkmaschinen des Typs "Malimo" der Firma Karl Mayer bekannt.

Besonders geeignet sind auch Nadelvliese. Beim Nadelvlies wird ein Faserflor zu einem Flächengebilde mit Hilfe von mit Widerhaken versehenen Nadeln. Durch wechselndes Einstechen und Ausziehen der Nadeln wird das Material auf einem Nadelbalken verfestigt, wobei sich die Einzelfasern zu einem festen Flächengebilde verschlingen.

Weiterhin besonders vorteilhaft ist ein Stapelfaservlies, das im ersten Schritt durch mechanische Bearbeitung vorverfestigt wird oder das ein Nassvlies ist, das hydrodynamisch gelegt wurde, wobei zwischen 2 Gew.-% und 50 Gew.-% der Fasern des Vlieses Schmelzfasern sind, insbesondere zwischen 5 Gew.-% und 40 Gew.-% der Fasern des Vlieses. Ein derartiges Vlies ist dadurch gekennzeichnet, dass die Fasern nass gelegt werden oder zum Beispiel ein Stapelfaservlies durch die Bildung von Maschen aus Fasern des Vlieses durch Nadelung, Vernähung, Luft und/oder Wasserstrahlbearbeitung vorverfestigt wird. In einem zweiten Schritt erfolgt die Thermofixierung, wobei die Festigkeit des Vlieses durch das Auf- oder Anschmelzen der Schmelzfasern nochmals erhöht wird.

Vorteilhaft und zumindest bereichsweise weist der Träger eine ein- oder beidseitig glattgeschliffene Oberfläche auf, vorzugsweise jeweils eine vollflächig glattgeschliffene Oberfläche. Die glattgeschliffene Oberfläche mag gechintzt sein, wie es beispielsweise in der EP 1 448 744 A1 erläutert wird. Auf diese Weise wird die Abweisbarkeit von Schmutz verbessert.

Als Ausgangsmaterialien für den Träger sind insbesondere (Chemie-)Fasern (Stapelfaser oder Endlosfilament) aus synthetischen Polymeren, auch synthetische Fasern genannt, aus Polyester wie Polyethylenterephthalat, Polyamid, Polyimid, Aramid, Polyolefin, Polyacrylnitril oder Glas, (Chemie)Fasern aus natürlichen Polymeren wie zellulosische Fasern (Viskose, Modal, Lyocell, Cupro, Acetat, Triacetat, Cellulon), wie Gummifasern, wie Pflanzeneiweißfasern und/oder wie Tiereiweißfasern und/oder natürliche Fasern aus Baumwolle, Sisal, Flachs, Seide, Hanf, Leinen, Kokos oder Wolle vorgesehen. Die vorliegende Erfindung ist aber nicht auf die genannten Materialien beschränkt, sondern es können, für den Fachmann erkenntlich ohne erfinderisch tätig werden zu müssen, eine Vielzahl weiterer Fasern zur Herstellung des Vlieses eingesetzt werden.

Des Weiteren sind Garne, gefertigt aus den angegebenen Rohstoffen, ebenfalls geeignet. Bei Geweben oder Gelegen können einzelne Fäden aus einem Mischgarn hergestellt werden, also synthetische und natürliche Bestandteile aufweisen. In der Regel sind die Kettfäden und die Schussfäden jedoch jeweils sortenrein ausgebildet.

Bevorzugt wird als Material für den Träger Polyester verwendet, aufgrund der hervorragenden Alterungsbeständigkeit und der hervorragenden Medienbeständigkeit gegenüber Chemikalien und Betriebsmitteln wie Öl, Benzin, Frostschutzmittel u.ä. Darüber hinaus hat Polyester den Vorteil, dass sie zu einem sehr abriebfesten und temperaturbeständigen Träger führen, was für den speziellen Einsatzzweck zur Bündelung von Kabeln in Automobilen und beispielsweise im Motorraum von besonderer Wichtigkeit ist. Gemäß einer Ausführungsform der Erfindung wird als Träger ein PET-Vlies oder ein PET-Gewebe verwendet.

Vorteilhaft liegt das Flächengewicht des textilen Trägers zwischen 30 $g/m^2$ und 300 $g/m^2$ weiter vorteilhaft zwischen 50 $g/m^2$ und 200 $g/m^2$, besonders vorteilhaft zwischen 50 $g/m^2$ und 150 $g/m^2$, ganz besonders vorteilhaft zwischen 70 $g/m^2$ und 130 $g/m^2$.

Gemäß einer besonders vorteilhaften Ausführungsform der Erfindung werden als Träger ein Gewebe oder ein Vlies aus Polyester eingesetzt, die ein Flächengewicht zwischen 50 $g/m^2$ und 150 $g/m^2$ aufweisen.

Vorteilhaft liegt der Masseauftrag des auf den Träger aufgebrachten und/oder in den Träger eingebrachten Bindemittels zwischen 30 $g/m^2$ und 500 $g/m^2$, weiter vorteilhaft zwischen 40 $g/m^2$ und 400 $g/m^2$, besonders vorteilhaft zwischen 50 $g/m^2$ und 300 $g/m^2$.

Das Einbringen in den Träger, insbesondere in einen Vlies- oder Gewebeträger kann beispielsweise durch Extrusionsbeschichtung des Trägers mit der thermisch härtbaren Zusammensetzung erfolgen.

Die Verarbeitungstemperatur des mit der Klebemasse und der thermisch härtbaren Klebeschicht beschichteten Trägers sollte bei der Trocknung 60 °C nicht überschreiten, um eine vorzeitige Reaktion zu verhindern. Gleiches gilt auf für die Lagerungstemperatur.

Das fertig beschichtete Material wird vorzugsweise in eine Breite von $20 \pm 2$ mm (jede andere Breite ist ebenfalls denkbar) geschnitten und spiralförmig mit einer Überlappung von 50% um das in Form gebrachte Kabelbündel gewickelt. Für die Aktivierung der thermisch härtbaren Klebeschicht ist eine Temperaturbeaufschlagung von 110 °C für 10 min nötig. Die Temperaturbeaufschlagung kann durch Heißluftfön, IR-Strahler, Ofen, Heizmanschette, o.ä. erfolgen.

Gemäß einer bevorzugten Ausführungsform der Erfindung ist die Klebemasse nach dem Aufbringen auf den Träger zu mehr als 10 %, vorzugsweise zu mehr als 25 %, weiter vorzugsweise zu mehr als 50 % in den Träger eingesunken. Ein Zahlenwert von beispielsweise 25 % bedeutet dabei, dass die Klebemasse über eine Schichtdicke von 25 % der Dicke des textilen Trägers eingedrungen ist, also bei einem Träger mit einer Dicke von 100 μm über eine Schichtdicke von 25 μm innerhalb des Trägers, und zwar beginnend von der Fläche des Trägers, auf der die Klebemasse beschichtet ist, und in senkrechter Richtung zu der von der Längs-beziehungsweise Quererrichtung aufgespannten Ebene.

Das fertig beschichtete Material wird vorzugsweise mit einer Schutzfolie versehen.

Gegenstand der vorliegenden Erfindung ist ein Verfahren zum Ummanteln von langgestrecktem Gut wie insbesondere Leitungen oder Kabelsätzen, wobei ein Klebeband gemäß einem der vorangehenden Ansprüche in einer Schraubenlinie um das langgestreckte Gut geführt wird oder das langgestreckte Gut in axialer Richtung von dem Klebeband umhüllt wird, das langgestreckte Gut mitsamt dem umhüllenden Klebeband in die gewünschte Anordnung, insbesondere in den Kabelsatzplan gebracht wird, das langgestreckte Gut in dieser Anordnung gehalten wird, die aushärtbare Klebemasse durch die Zufuhr von Wärme bei einer Temperatur von bis zu 110 °C, bevorzugt zwischen 60 °C und 110 °C zum Aushärten gebracht wird. Vorzugsweise wird die thermische Energie über einen Zeitraum von 0,5 Sek. bis 10 Min., vorzugsweise 2 Min. bis 6 Min. zugeführt, der mit den Taktzeiten des Fertigungsprozesses kompatibel ist, so dass das langgestreckte Gut vollständig ausgehärtet ist, sobald es im Zielobjekt wie Automobilen, Wasserfahrzeugen oder Flugzeugen verbaut wird.

Das Band wird vorzugsweise spiralförmig mit einer Überlappung von 30 % bis 70 %, bevorzugter 40 % bis 50 %, insbesondere etwa 50 % um das langgestreckte Gut umwickelt.

Schließlich bezieht sich die vorliegende Erfindung auch auf einen mit dem gehärteten Klebeband ummantelten Kabelstrang und auf einen nach dem erfindungsmäßen Verfahren hergestellten Kabelstrang.

In der Figur 2 ist im Schnitt in Querrichtung (Querschnitt) das Klebeband gezeigt, das aus einem Vliesträger 31 besteht, auf den einseitig eine Schicht einer aushärtbaren Klebemasse 32 aufgebracht ist, die zusätzlich selbstklebend ist.

Die Klebemasse ist zu 25 % in den Träger eingesunken (33), was eine optimale Verankerung bewirkt.

Ebenfalls vom erfinderischen Gedanken umfasst ist ein ummanteltes langgestrecktes Gut, wie insbesondere ein Kabelsatz, ummantelt mit einem erfindungsgemäßen Klebeband, sowie ein Fahrzeug, enthaltend ein derartig ummanteltes langgestrecktes Gut.

Prüfmethoden

Die folgenden Prüfmethoden wurden eingesetzt, um die hergestellten Muster kurz zu charakterisieren:

Viskosität

Ein Maß für die Fließfähigkeit des fluiden Beschichtungsmaterials ist dynamische Viskosität. Die dynamische Viskosität wird nach DIN 53019 bestimmt. Als Fluid wird eine Viskosität von weniger als 108 Pa·s bezeichnet. Die Viskosität wird in einem Zylinderrotationsviskosimeter mit einer Standardgeometrie nach DIN 53019-1 bei einer Messtemperatur von 23 °C und einer Schergeschwindigkeit 1 s-1 gemessen.

Molmasse

Angaben zur zahlenmittleren Molmasse Mn beziehungsweise zur gewichtsmittleren Molmasse Mw beziehen sich auf die Messung mittels Gelpermeationschromato¬graphie (GPC) wie folgt:
Als Eluent wurde THF (Tetrahydrofuran) mit 0,1 Vol. % Trifluoressigsäure eingesetzt. Die Messung erfolgte bei 25 °C. Als Vorsäule wurde PSS-SDV, 5 μ, $10^3$ Å, ID 8,0 mm x 50 mm verwendet. Zur Auftrennung wurden die Säulen PSS-SDV, 5 μ, $10^3$ sowie 105 und 106 mit jeweils ID 8,0 mm x 300 mm eingesetzt. Die Probenkonzentration betrug 4 g/l, die Durchflussmenge 1,0 ml pro Minute. Es wurde gegen Polystyrol-Standards gemessen.

Erweichungstemperaturen von Polymeren beziehungsweise Harzen Die Erweichungstemperatur wird, sofern nicht im Einzelnen anders angegeben, nach der einschlägigen Methodik durchgeführt, die als ‚Ring and Ball' bekannt ist und nach ASTM E28 standardisiert ist.

Zur Bestimmung der Erweichungstemperatur kommt ein Ring-Kugel-Automat HRB 754 der Firma Herzog zum Einsatz. Die zu vermessenden Proben - etwa das Harz oder das Elastomer - werden zunächst fein gemörsert. Das resultierende Pulver wird in einen Messingzylinder mit Bodenöffnung (Innendurchmesser am oberen Teil des Zylinders 20 mm, Durchmesser der Bodenöffnung des Zylinders 16 mm, Höhe des Zylinders 6 mm) gefüllt und auf einem Heiztisch geschmolzen. Die Befüllmenge wird so gewählt, dass die Probe nach dem Schmelzen den Zylinder ohne Überstand voll ausfüllt.

Der resultierende Probekörper wird samt Zylinder in die Probehalterung des HRB 754 eingelegt. Zur Befüllung des Temperierbads wird Glycerin verwendet, sofern die Erweichungstemperatur zwischen 50 °C und 150 °C liegt. Bei niedrigeren Erweichungstemperaturen kann auch mit einem Wasserbad gearbeitet werden. Die Prüfkugeln haben einen Durchmesser von 9,5 mm und wiegen 3,5 g. Entsprechend der HRB 754 Prozedur wird die Kugel oberhalb des Probekörpers im Temperierbad angeordnet und auf dem Probekörper abgelegt. 25 mm unter dem Zylinderboden befindet sich eine Auffangplatte, 2 mm über diese eine Lichtschranke. Während des Messvorgangs wird die Temperatur mit 5 °C/min erhöht. Im Temperaturbereich der Erweichungstemperatur beginnt sich die Kugel durch die Bodenöffnung des Zylinders zu bewegen, bis sie schließlich auf der Auffangplatte zum Stehen kommt. In dieser Position wird sie von der Lichtschranke detektiert und zu diesem Zeitpunkt die Temperatur des Temperierbads registriert. Es findet eine Doppelbestimmung statt. Die Erweichungstemperatur ist der Mittelwert aus den beiden Einzelmessungen.

Weitere Referenzmethoden ergeben sich aus den Testmethoden im Experimentellen Teil.

## Experimenteller Teil

In einigen Beispielen des experimentellen Teils wurde ein Planetwalzenextruder der Firma ENTEX Rust&Mitschke verwendet. Die Planetwalzenextruder-Konfiguration, die in den Beispielen verwendet wird, zeigt Figur 1, die Figur dient gleichzeitig dazu, den grundsätzlichen Aufbau eines Planetwalzenextruders beispielhaft zu illustrieren.

Der Planetwalzenextruder hat einen Füllteil (2) und einen Compoundierteil (5), der aus vier hintereinander geschalteten Walzenzylindern (5a bis 5d), jeweils entsprechend einer Compoundierzone, besteht. Der Walzenzylinder 5a entspricht dabei der ersten Compoundierzone. Innerhalb eines Walzenzylinders tauschen die durch die Umdrehung der Zentralspindel (6) angetriebenen Planetenspindeln (7) die Materialien zwischen Zentralspindel (6) und Planetenspindeln

(7) beziehungsweise zwischen Planetenspindeln (7) und der Wandung (10) des Walzenzylinders (5a bis 5d) ab.

Am Ende jedes Walzenzylinders (5a bis 5d) befindet sich ein Anlaufring (8a bis 8d), der die Planetenspindeln (7) ortsfest hält.

Über die Füllöffnung (1) können Komponenten wie zum Beispiel Elastomere, Füllstoffe, Antioxidantien usw. auf die Förderschnecke (3) des Füllteils (2) des Planetwalzenextruders dosiert werden. Die Förderschnecke (3) übergibt die Materialien danach auf die Zentralspindel (6) des ersten Walzenzylinders, also der ersten Compoundierzone (5a). Zur Verbesserung des Materialeinzugs zwischen Zentralspindel (6) und Planetenspindeln (7) werden bei den Experimenten im ersten Walzenzylinder (5a) vier lange und drei kurze Planetenspindeln (7) verwendet, generell sind auch andere Anordnungen realisierbar.

Die innen hohle Förderschnecke (3) und Zentralspindel (6) sind kraftschlüssig miteinander verbunden und besitzen einen gemeinsamen Temperierkreis. Jeder Walzenzylinder (5a bis 5d) des Compoundierteils (5) verfügt über eine unabhängige Temperierung. Über einen weiteren Temperierkreis kann das Füllteil (2) gekühlt werden. Als Temperiermedium kann Wasser verwendet werden.

Die Dosierung insbesondere der zum Aufschluss verwendeten Epoxidharze, aber auch anderer Komponenten kann beispielsweise über den Einspritzring (4) vor dem ersten Walzenzylinder (5a) beziehungsweise über die mit Bohrungen versehenen Anlaufringe (8a bis 8d) oder in Kombination beider Möglichkeiten erfolgen. Die Walzenzylinder (5a bis 5d) sind in ungefähr der Mitte der Zylinder mit einer Öffnung für Seitenbeschickung versehen. Über diese können bei Bedarf über Seitenbeschicker (9a bis 9d) flüssige oder feste Komponenten - wie insbesondere weitere Reaktivharze und Vernetzer - zugegeben werden.

Die Temperatur der Haftklebemasse wird mittels Einstechfühler im Produktaustritt (11) ermittelt.

<u>Lagerfähigkeit</u>

Die Lagerfähigkeit (Lf) der Klebebänder wurde über DSC bestimmt. Dazu wird die Reaktionswärme von Mustern, die 10d bei 40°C ($\Delta H_{10d40}$) und 10d bei 60°C ($\Delta H_{10d60}$) gelagert wurden, bestimmt und in Vergleich zur Reaktionswärme einem frisch hergestellten Musters ($\Delta H_{frisch}$) gesetzt.

$$Lf_{40} = \Delta H_{10d40} / \Delta H_{frisch}$$

und

$$Lf_{60} = \Delta H_{10d60} / \Delta H_{frisch}$$

Die Lagerfähigkeit entspricht somit der prozentualen Restreaktivität der reaktiven Klebebänder. In manchen Fällen war die gemessene Reaktionswärme der gelagerten Proben minimal größer, als die des frischen Musters. Die Lagerfähigkeit ist in diesen Fällen auf 1 gesetzt.

<u>Kipp-Schertest</u>

Vergleiche hierzu Figur 4. Auf einem Glassubstrat (2.1) wird eine Stahlform (2.2) mit plattenförmiger, ebener Grundfläche; Kantenlänge ca. 2,5 cm x 2 cm; und anderseitiger Ausformung zum Befestigen eines Hebels (2.3), die auf der ebenen Grundfläche zunächst mit einer 2,0 cm x 2,0 cm und 500 µm dicken Klebmasseschicht (2.4) ausgerüstet wurde, blasenfrei aufgeklebt und für eine Minute mit einem 2 kg Gewicht angedrückt. Die Aushärtung der Klebemasse (2.4) erfolgte bei 145 °C in 30 Minuten; nachfolgend erfolgte eine Feucht-Wärmelagerung in einem Klimaschrank bei 65 °C und 90 % r.F. Die Bewertung des Kipp-Schertests erfolgte in einer Zwick-Prüfmaschine mit 20 kN Prüfkopf. Auf die verklebte Stahlform (2.2) wird dazu ein Hebel (2.3) wie in Figur 4 dargestellt, befestigt. Die Maschine drückt den Hebel nach unten (Druck dargestellt durch Pfeil 2.5), bis die Glas-Stahl Verklebung versagt.

Das Ergebnis der Messung ist das Bruchbild. Adhäsiv (A) bedeutet, dass die Klebmasse (2.4) rückstandsfrei von der Glasplatte (2.2) entfernt wurde. Kohäsiv (K) bedeutet, dass sowohl auf der ebenen Grundfläche der Stahlform (2.2), als auch auf dem Glassubstrat (2.1) Rückstände der Klebmasse (2.4) zu finden sind.

<u>Thermoplastizität</u>

Die Bestimmung der Thermoplastizität beziehungsweise Nicht-Thermoplastizität erfolgte auf einer Laborheizplatte der Firma Ikamag. Auf die Heizplatte wurde eine quadratische Stahlplatte entsprechend der Spezifizierung gemäß ISO 29862:2007, Abschnitt 5.3.3, gelegt, aber mit einer Kantenlänge, dass die Heizplatte komplett abgedeckt war, und einer Dicke von 1,1 mm. Die Temperatur der der Heizplatte abgewandten Oberfläche der Stahlplatte wird mit einem

Temperaturfühler gemessen.

Das zu testende Polymer (ein Würfel von ca. 2 cm x 2 cm x 2 cm Höhe, Breite, Tiefe) oder im Falle von Granulaten ein Granulatkügelchen wurde mittig auf die freie Oberfläche der Stahlplatte gelegt.

Es wurden drei Testreihen mit jeweils identischen Mustern des zu testenden Polymers gefahren, bei denen die Stahlplatte bei einer Testreihe auf eine Temperatur von 150 °C, bei der zweiten Testreihe auf eine Temperatur von 200 °C und bei der dritten Testreihe auf eine Temperatur von 250 °C erhitzt wurde (Heizrate jeweils ca. 1 °C pro Sekunde, Bestimmung der Temperatur mittels des Temperaturfühlers). Die Probe wurde für 1 Minute auf der jeweiligen Endtemperatur gehalten und die Stahlplatte dann auf einen Winkel von 60° (bezogen auf den planaren, horizontalen Untergrund) geneigt.

Die gemessene Probe gilt als nicht thermoplastisch zumindest bis zu der jeweiligen Temperatur, wenn sie bei der Neigung von selbst von der Platte fällt/rollt.

Für die gemessene Probe gilt, dass sie thermoplastisches Verhalten bereits unterhalb einer jeweiligen Temperatur aufweist, wenn sie bei dem Test zu der jeweiligen Temperatur für mindestens 2 Sekunden an der Platte anhaftet - und somit durch ein zumindest teilweises Aufschmelzen aufgeflossen ist -, wenn sie also innerhalb des Zeitraums von 2 Sekunden also nicht von selbst von der Platte fällt/rollt.

<u>Verwendete Rohstoffe:</u>

| | |
|---|---|
| Breon N41H80 | Heißpolymerisierter Nitril-Butadien-Kautschuk mit einem Acrylnitrilanteil von 41 Gew.-%. Mooney-Viskosität gemäß technischem Datenblatt 70 bis 95. Nicht-thermoplastisch bis 250 °C nach Testmethode für Thermoplastizität. Hersteller/Anbieter Zeon Chemicals. |
| Araldite ECN 1273 | Festes Epoxy-Cresol-Novolak mit einer Erwei-chungstemperatur 68 bis 78 °C und einem EEW von 217 bis 233 g/eq. Hersteller/Anbieter Huntsman. |
| Araldite GT7072 | Festes difunktionelles Bisphenol-A / Epich-lorhydrin Epoxidharz mit einem EEW von 570 bis 595 g/eq und einer Erweichungstemperatur von 82 bis 90 °C. Hersteller/Anbieter Huntsman. |
| Epon 828 | Difunktionelles Bisphenol-A / Epichlorhydrin Flüssigepoxid mit einem Gewicht pro Epoxid von 185 bis 192 g/eq. Viskosität bei 25 °C von 12 bis 14 Pa s. Hersteller/Anbieter Momentive. |
| Struktol PolyDis 3611 (= Struktol PD3611) | Nitrilkautschukmodifiziertes Epoxidharz auf der Basis von Bisphenol-F-Diglycidylether mit einem Elastomergehalt von 40 Gew.-% und einem Gewicht pro Epoxid von 550 g/eq Viskosität bei 25 °C von 10000 Pa s. Hersteller/Anbieter Schill + Seilacher. |
| KSR-177 | Gemäß Sicherheitsdatenblatt des Herstellers (*MSDS No. : FS- [Rev. 6],* issued 2010-02-01, Rev. 6 2013-03-07) ein fettsäuremodifiziertes Epoxidharz mit einem Epoxyäquivalent von 190 bis 220 g/eq. Viskosität bei 25 °C von 9 bis 15 Pa s. Hersteller/Anbieter Kukdo Chemical Co Ltd. |
| Reaktivharz 1 | Fettsäuremodifiziertes Epoxidharz hergestellt aus Epon 828 und Sylfat FA1. Das Reaktionsprodukt wurde mit Epon 828 abgemischt und auf einen EEW von 200 g/eq eingestellt. |
| Reaktivharz 2 | Silanmodifiziertes Epoxidharz hergestellt aus 3-Isocyanatopropyltriethoxy-silan (CAS: 24801-88-5) und Araldite GT7072. EEW = 650 - 750g/eq. |
| Dyhard 100S | Latenter Härter für Epoxidsysteme bestehend aus mikronisiertem Dicyandiamid bei dem 98 % der Partikel kleiner 10 µm sind. AEW = 12 - 14 g/eq.Hersteller/Anbieter AlzChem |
| Curezol 2MA- OK | 2,4 Diamino-6-[2'-methylimidazolyl-(1')]-ethyl-s-triazin isocyanursäure Addukt Dihydrat. CAS: 68490-66-4. Hersteller/Anbieter Shikoku. |
| Curezol MZ-A | 2,4 Diamino-6-[2'-methylimidazolyl-(1')]-ethyl-s-triazin. CAS:38668-46-1. Hersteller/Anbieter Firma Shikoku. |
| Curezol 2PHZ | 2-Phenyl-4,5-dihydroxymethylimidazol. CAS: 61698-32-6. Hersteller/Anbieter Firma Shikoku. |
| Curezol 2E4MZ | 2-Ethyl-4-methylimidazol. CAS:931-36-2. Her-steller/Anbieter Firma Shikoku. |
| Curezol 2PZ | 2-Phenylimidazol. CAS: 670-96-2. Hersteller/Anbieter Firma Shikoku. |

| | |
|---|---|
| Curezol 2E4MZ-CN Sylfat FA1 | 1-Cyanoethyl-2-methylimidazol. CAS: 23996-55-6. Hersteller/Anbieter Firma Shikoku. Tallölfettsäuren der Firma Kraton |

Herstellung modifiziertes Reaktivharz 1

In einem Reaktionsgefäß wurden 76 g Epon 828 mit 56 g Sylfat FA1 vermischt und auf 250 °C erhitzt. Das entstandene Wasser wurde abdampfen gelassen. Das Produkt wurde ohne weitere Aufreinigung eingesetzt.

Herstellung modifiziertes Reaktivharz 2

In einem Rundkolben wurden unter Stickstoff-Atmosphäre 116 g Araldite GT7072 in 500 g Butanon gelöst. Über einen Troptrichter wurden 24.7 g 3-(Triethoxysilyl)propylisocyanat langsam in die gerührte Lösung getropft. Die Reaktion wurde zum Sieden gebracht und 1h Stunde unter Rückfluss gerührt. Dann wurde die Kühlung entfernt und das Lösungsmittel, sowie das entstandene Ethanol abgedampft. Das Produkt wurde ohne weitere Aufreinigung eingesetzt.

| **Beispiel:** | **K0** | **K1** | **K2** | **K3** | **K4** | **K5** | **K6** | **K7** |
|---|---|---|---|---|---|---|---|---|
| | Gew. teil e | Gew. teil e | Gew. teil e | Gew. teil e | Gew. teil e | Gew. teil e | Gew. teil e | Gew. teil e |
| Breon N41H80 | 30 | 30 | 30 | 30 | 30 | 30 | 30 | 30 |
| Epon 828 | 20 | 20 | 20 | 20 | 20 | | | |
| Araldite ECN 1273 | 30 | 30 | 30 | 30 | 30 | 30 | 30 | 30 |
| Struktol PD3611 | 20 | 20 | 20 | 20,0 | 20,0 | 20 | 20 | 20 |
| KSR-177 | | | | | | 20 | | |
| Reaktivharz 1 | | | | | | | 20 | |
| Reaktivharz 2 | | | | | | | | 20 |
| Dyhard 100S | 3,61 | 3,61 | 3,61 | 3,61 | 3,61 | 3,47 | 3,51 | 2,58 |
| Curezol 2MA-OK | 2,1 | 2,1 | | | | 2,1 | 2,1 | 2,1 |
| Curezol MZ-A | | | 2,1 | | | | | |
| Curezol 2PHZ | | | | 2,1 | | | | |
| Curezol 2E4MZ-CN | | | | | 2,1 | | | |
| Curezol 2E4MZ | | | | | | | | |
| Curezol 2PZ | | | | | | | | |

| **Beispiel:** | **V1** | **V2** | **V3** |
|---|---|---|---|
| | Gew. teil e | Gew. teil e | Gew. teil e |
| Breon N41H80 | 30 | 30 | |
| Epon 828 | 20 | 20 | 28,4 |
| Araldite ECN 1273 | 30 | 30 | |
| Struktol PD3611 | 20 | 20 | |
| KSR-177 | | | |
| Reaktivharz 1 | | | |
| Reaktivharz 2 | | | |
| Dyhard 100S | 3, 61 | 3, 61 | 2,0 |
| Curezol 2MA-OK | | | 0,85 |
| Curezol MZ-A | | | |

(fortgesetzt)

| **Beispiel:** | **V1** | **V2** | **V3** |
|---|---|---|---|
| | Gew. teil e | Gew. teil e | Gew. teil e |
| Curezol 2PHZ | | | |
| Curezol 2E4MZ-CN | | | |
| Curezol 2E4MZ | 2,1 | | |
| Curezol 2PZ | | 2, 1 | |

Herstellung der Klebebänder

Die Klebemassen der Beispiele wurden in einem Messkneter der Firma Haake bei Füllgraden zwischen 70 % bis 80 % hergestellt. Dazu wurde der Nitrilkautschuk und Struktol PD3611 vorgelegt und so lange bei 60 °C mit Walzenschaufeln geknetet, bis sich ein konstantes Drehmoment eingestellt hatte. Dann wurden die weiteren Rohstoffe zugegeben und geknetet. Zum Schluss wurden der Härter und gegebenenfalls der Beschleuniger zugegeben und ca. 5 Minuten bei ca. 80 °C Massetemperatur geknetet.

Die Klebmasse wurde in einer Vakuumpresse zu 500 $\mu$m dicken Transferklebefilmen blasenfrei zwischen zwei silikonisierten PET Folien verpresst.

In einem Vorversuch wurde außerdem die Zusammensetzung K0 (entsprechend K1, jedoch ohne Härter Dyhard 100S) hergestellt und für 15 Minuten bei 95° C geknetet, um die thermische Belastung des Extrusionsprozesses zu simulieren. Nach dem Pressvorgang war dieser Klebefilm weißlich, was zeigt, dass der Beschleuniger ungelöst partikulär den Knetprozess übersteht und dispergiert vorliegt.

K1 wurde zusätzlich auch in einem kontinuierlichen Prozess hergestellt und findet sich in der Bewertungstabelle als K1* wieder. Verwendet wurde ein Planetwalzenextruder der Firma Entex Rust & Mitschke mit vier gekoppelten Walzenzylindern, die einen Innendurchmesser von 70 mm aufwiesen. Die ersten beiden Walzenzylinder waren mit jeweils 7 Planetenspindeln bestückt, die zwei nachfolgenden mit jeweils 6 Planetenspindeln. Der Dispergierring nach dem ersten Walzenzylinder hatte einen freien Querschnitt von 38 mm, der Dispergierring nach dem zweiten Walzenzylinder einen von 34,5 mm und der Dispergierring nach dem dritten Walzenzylinder einen von 34 mm. In der vorliegenden Ausführungsform des Planetwalzenextruders weist das Füllteil eine Förderschnecke auf, auf die das Material dosiert werden kann. Die verwendeten Prozessparameter sind im Folgenden detailliert beschrieben. Stromabwärts des Planetwalzenextruders wurde ein Doppelschneckenextruder (DSE) als Entgasungsextruder eingesetzt (Krauss-Maffei Berstorff, 42 mm Schneckendurchmesser, 36 L/D), wobei in einer Entgasungszone ein Vakuum von 200 mbar angelegt wurde. Der Entgasungsextruder wurde durchgehend mit 60 °C temperiert, bei einer Drehzahl von 90 U/min. Der Härter wurde im ersten Drittel des DSE zudosiert. Wurden Härter und Beschleuniger verwendet, so wurden Mischungen (''Batch") aus Dyhard 100S und dem entsprechenden Beschleuniger im entsprechenden Mischungsverhältnis hergestellt und ebenfalls im ersten Drittel im DSE zudosiert. Der angegebene Massestrom bezieht sich demnach auf eine Mischung aus Härter und Beschleuniger.

Die Austrittstemperatur der Klebmasse aus dem Planetwalzenextruder lag im Bereich von 85 °C und 95 °C. Nach Durchgang durch den nachgeschalteten Doppelschneckenextruder lagen die Temperaturen auf vergleichbaren Niveau.

| Experiment | Massestrom Zone 1 / kg/h | | Massestrom Zone 2/ kg/h | Massestrom Zone 3/ kg/h | | Massestrom Entgasungs DSE / kg/h |
|---|---|---|---|---|---|---|
| | Breon N41H80 | Araldite ECN 1273 | Struktol | PD3611 | Epon828 | Dyhard 100S-Beschleniger-Batch |
| K1* | 7,5 | 7,5 | 5 | | 5 | 1,43 |

Für das obige Beispiel wurden folgende Verfahrensparameter gewählt:

| | Zone 1 | Zone 2 | Zone 3 | Zone 4 |
|---|---|---|---|---|
| Anzahl Planeten | 7 | 7 | 6 | 6 |
| $T_{Walzenzylinder}$ /°C | 80 | 70 | 60 | 50 |
| $T_{Zentralspindel}$ /°C | 30 | 30 | 30 | 30 |

(fortgesetzt)

| | Zone 1 | Zone 2 | Zone 3 | Zone 4 |
|---|---|---|---|---|
| Durchmes-ser Disper-gierring / mm | | 38 | 34,5 | 34 |
| Drehzahl / U/min | 70 | | | |

Bewertung der Klebebänder

| Beispiel: | K1 | K1* | K2 | K3 | K4 | K5 | K6 | K7 |
|---|---|---|---|---|---|---|---|---|
| Klebkraft un-gehartet (Stahl) / N $cm^{-1}$ | 8,1 | 9,3 | 7,9 | 8,5 | 8,7 | 8,3 | 8,8 | 8,1 |
| Bruchbild Kipp-schertest nach Feucht composite coating | A | A | A | A | A | K | K | K |
| Lagerfähigkeit $Lf_{40}$ | 0,9 9 | 0,9 8 | 0,5 3 | 0,9 7 | 0,0 8 | 0,9 6 | 1,0 | 0,9 9 |
| Lagerfähigkeit $Lf_{60}$ | 0,7 8 | 0,7 3 | 0 | 0,8 1 | 0 | 0,8 1 | 0,7 9 | 0,7 1 |

| **Beispiel:** | **V1** | **V2** | **V3** |
|---|---|---|---|
| Klebkraft ungehärtet (Stahl) / N $cm^{-1}$ | n.b . | n.b . | n.b . |
| Bruchbild Kipp-Schertest nach Feucht-Wärme Lagerung* | n.b . | n.b . | n.b . |
| Lagerfähigkeit $Lf_{40}$ | 0 | 0 | 0,8 3 |
| Lagerfähigkeit $Lf_{60}$ | 0 | 0 | 0 |
| n.b. = nicht bestimmt<br>* A = adhäsives Versagen an der Glasgrenzfläche K = vollständig kohäsives Versagen<br>Lagerbedingungen: 300 h bei 65 °C und 90 % r.H. | | | |

Die erfindungsgemäßen Klebebänder lassen sich über einen Hotmeltprozess herstellen. Falls es im Herstellungsprozess zu Vorreaktionen des Reaktivsystems kommt, so geschieht dies nur in geringem Umfang, da alle Klebebänder sehr gute Klebkräfte auf Stahl aufzeigen. Die Gegenbeispiele V1 und V2 mit Imidazolbeschleunigern ohne Heteroatom zeigen keine ausreichende Stabilität. So steigt die Viskosität der Klebmasse bereits im Herstellprozess stark, sodass die Messung der Klebkraft und des Kipp-Schertests nicht möglich waren.

Beim Vergleich von V1 mit K4 zeigt sich der positive Effekt auf die Lagerfähigkeit der Cyanoethylgruppe bei sonst vergleichbarer chemischer Struktur. Das gleiche gilt für den direkten Vergleich von V2 mit K3. Beide Klebstoffe enthalten einen 2-Phenylimidazol-basierten Beschleuniger. In K3 ist der Beschleuniger aber zusätzlich mit Hydroxygruppen funktionalisiert. Ein Nachteil des Beschleunigers in K3 ist die mit der hohen Stabilität einhergehende benötigte hohe Aushärtetemperatur. Im Gegensatz zu allen anderen Beispielen wurde K3 für 30 Minuten bei 160°C ausgehärtet.

Deutlich stärker beschleunigen die Triazin-modifizierten Imidazole wie sie in K1, K1* und K2 beispielhaft verwendet wurden. Obwohl sich die Klebmassen bei 140 °C aushärten lassen, sind die Beschleuniger im Vergleich zu unmodifizierten Imidazolen, wie in V1 und V2 verwendet, deutlich stabiler. Im direkten Vergleich der beiden Triazin-modifizierten Imidazole zeigt sich der zusätzlich mit Säure stabilisierte Beschleuniger in K1 als besonders lagerstabil.

Überraschenderweise wurde festgestellt, dass Klebmassen mit hohen Schmelzviskositäten im Temperaturbereich, der bei der Herstellung auftritt, zum Beispiel 90 °C deutlich bessere Lagerfähigkeiten als niedrigviskose Epoxidharze aufzeigen. Exemplarisch ist dies im Vergleich von K1 zu V3 gezeigt. In V3 ist das gleiche Härter-Beschleuniger-System von K1 verwendet, jedoch in einem niedrigviskosen Epoxidharz (~10 Pa s bei 23 °C und deutlich unter 1 Pa s bei 90 °C). Die Lagerfähigkeiten unterscheiden sich signifikant. Dies zeigt sich bereits bei der Lagerung bei 40 °C und ist nochmal deutlich ausgeprägter bei der Lagerung bei 60 °C. V3 ist in der 60 °C Lagerung bereits ausgehärtet, wohingegen sich K1 noch relativ stabil zeigt. Die Schmelzviskosität bei 90 °C (komplexe Viskosität $\eta^*$ gemessen mittels DMA-Temperatursweep mit einer Aufheizgeschwindigkeit von 0,1°C/min) lag bei allen Klebmassen K1- K7 und V1 und V2 über 100 Pa s.

Die Lagerfähigkeit der erfindungsgemäßen Klebebänder wird auch in einem kontinuierlichen Herstellungsprozess an einem Extruder zudem nicht negativ beeinflusst. Dies ist an Beispiel K1* im direkten Vergleich zu K1 gezeigt.

In Bezug auf die Kipp-Scherfestigkeit bei Verklebungen auf Glasoberflächen wurde überraschenderweise ein positiver Effekt bei Verwendung von modifizierten Epoxidharzen (K5 bis K7) gefunden. Nach Feucht-Wärme Lagerung bei

65 °C und 90 % r.F. für 300 h ändert sich das Bruchbild von adhäsiven Versagen (K1 - K4) durch Austausch des flüssigen Epoxidharzes Epon 828 hin zu vollständig kohäsiven Versagen. Die Performance der Klebmassen mit silanmodifizierten und fettsäuremodifizierten Epoxidharzen ist hier offensichtlich vergleichbar. Ein entscheidender Vorteil der fettsäuremodifizierten Epoxidharze im Vergleich zu silanmodifizierten Epoxidharzen liegt nicht in den Verklebungseigenschaften, sondern im Applikationsverfahren versteckt. So zeigen silanmodifizierte Klebmassen die Tendenz mit den silikonisierten Linern zu reagieren, wodurch solche Klebmassen häufig nach längerer Lagerung relativ schwer vom Liner zu trennen sind. Dies wurde bei Verwendung der fettsäuremodifizierten Epoxidharze nicht beobachtet.

Ohne sich an diese Theorie binden zu wollen, wird zudem eine positive Wechselwirkung des erfindungsgemäß eingesetzten Beschleunigers mit den im Planetwalzenextruder herrschenden Scherungen und Temperaturbelastungen vermutet. Für eine besonders lange Lagerfähigkeit ist es besonders gut, wenn sich der Beschleuniger während des Herstellprozesses nicht im Klebstoff löst. Vermutlich sind diese mit Heteroatom modifizierten Imidazole "härter" und somit den Scherkräften widerstandfähiger.

**Beispiel K8** - Biegeprüfung zur Ermittlung der Steifigkeit

Ein Prüfmuster, bestehend aus 250 Einzelleitungen mit einem Leitungsquerschnitt von 0,35 $mm^2$, wurde mithilfe eines 9 mm breiten Klebebandes (tesa 51618) zu einem Musterleitungssatz gebündelt, so dass der Musterleitungssatz einen Durchmesser von 23$\pm$5 mm und eine Länge von 300$\pm$50 mm aufwies. Dieser Musterleitungssatz wurde mit einem Klebeband mit einer erfindungsgemäßen Klebemasse spiralförmig umwickelt, wobei ein Überlapp von 50 % gewährleistet wurde. Anschließend wurde das Klebeband mittels Wärme gehärtet.

Zur Herstellung des Klebebands wird ein 19 mm bis 20 mm breiter und 220 $\mu$m dicker PET-Gewebeträger mit einem Flächengewicht von 130 g/$m^2$ mit einer Klebemasse gemäß Beispiel K1 bei einem Auftragsgewicht von 150 g/$m^2$ beschichtet.

Der gehärtete Musterleitungssatz wurde einer Biegeprüfung unterzogen, um den Einfluss des versteifenden Materials auf die Steifigkeit zu bestimmen. Die Biegeprüfung wurde an einer Zugprüfmaschine vorgenommen. Dafür wurde der Musterleitungssatz auf zwei Backen mit einem Abstand von 70 mm gelegt und mittig mit einer Druckfinne um einen Weg von 30 mm eingedrückt und belastet. Die für die Verformung des Messwegs nötige Kraft wurde von einer Zugprüfmaschine in Newton aufgezeichnet. Die Prüfgeschwindigkeit betrug 100 mm/min, sowohl bei der Belastung, als auch bei der Entlastung des Musterleitungssatzes. Die Prüfung wurde an 3 verschiedenen Stellen des Leitungssatzes (Anfang, Mitte und Ende) durchgeführt. Die Biegekraft resultiert aus dem Mittelwert der drei Einzelmessungen und wurde in drei Kategorien wie folgt bewertet:

**Bewertungskategorien 3-Punkt Biegeversuch:**

+ gut geeignet für die Anwendung (500-750 N)

O eingeschränkt geeignet für die Anwendung (400-500 N und 700-800 N)

- nicht geeignet für die Anwendung (< 400 und > 800 N)

Zum Vergleich wurde ein kommerziell erhältliches Klebeband, tesa® 51036, dem gleichen Versuch unterworfen. Die Ergebnisse sind in der nachfolgenden Tabelle 1 aufgeführt.

**Beispiel K9** - C-Form-Prüfung zur Ermittlung der Steifigkeit bei unterschiedlichen Temperaturen

Zur Ermittlung der Steifigkeit eines gebogenen Kabelmusters wurde ein Testverfahren entwickelt (C-Kabelmuster-Biegeprüfung). Zur Herstellung eines C-Kabelmusters (siehe Figur 1) wird eine Kabelleitung (10) mit einem Leitungsquerschnitt von 0,35 $mm^2$ 100-mal um eine Halterung (1) zu einem Musterleitungssatz gewickelt. Die Halterung (1) weist zwei gegenüberliegende, halbkreisförmige Führungen (2, 3) mit einem Durchmesser von 120 mm auf, die mit einem Abstand (A) von etwa 210 mm beabstandet sind. Der gewickelte Kabelsatz ist in Fig. 1 dargestellt.

Die Zahl der Kabelwicklungen beträgt 100. Es entsteht ein Musterleitungssatz mit einem Durchmesser von 15$\pm$5 mm und einem Umfang von 690 mm. An den Apizes der Halbkreissegmente und an jeweils zwei Geradenabschnitten (Schenkeln) wird das Kabelbündel (10) mit Kabelbindern (4, 5, 6, 7, 8, 9) mit einer Zugkraft von 210$\pm$10 N zusammengeschnürt und fixiert, so dass das das Kabelbündel (10) nach Herausnahme aus der Halterung eine ausreichende Steifigkeit besitzt, um sich nicht zu verformen. Um sie Steifigkeit des Kabelbündels (10) weiter zu verbessern, wird zwischen den Schenkeln des Kabelbündels eine Stütze (11) positioniert und ebenfalls mit Kabelbindern fixiert.

Das so hergestellte Kabelbündel (10) wird aus der Halterung herausgenommen und mit dem zu prüfenden Klebeband (Breite 19 mm-20 mm) mit einer 50%igen Überlappung umwickelt. Dazu wird mit der Umwicklung an einem Kabelbinder (zum Beispiel 6 oder (7)) des Schenkels in Richtung Kreissegment ((6)->(4) oder (7)->(5)) begonnen. Wenn die Umwicklung den Kabelbinder (4) bzw. (5) am Apex des Halbkreissegments erreicht, wird dieser entfernt und die Wicklung bis zum nächsten Kabelbinder ((4)->(8) bzw. (5)->(9)) des gegenüberliegenden Schenkels fortgeführt. Genauso wird auch an der anderen Seite, am anderen Halbkreissegment verfahren.

Die so präparierten Muster werden der entsprechenden Vernetzungsmethode (thermische Energie, 110 °C) zugeführt. Mit einem Seitenschneider werden die Muster, benachbart zu den noch vorhandenen Kabelbindern geschnitten, um zwei "C-förmige" Kabelmuster (C-Kabelmuster) zu erhalten, die an beiden Seiten des halbkreisförmigen, umwickelten Abschnitts jeweils auch einen nicht umwickelten Abschnitt aufweisen. Der Schnitt erfolgt im Abstand des Durchmessers (120 mm) vom Apex des Halbkreissegments, projiziert auf die Kreismitte.

Mit je einem Stück Kabel werden Schlaufen an die Schenkelenden der Muster gebunden, damit sie an dem einen Ende aufgehängt und am anderen Ende ein Gewicht angehängt werden kann. Die verbliebenen Kabelbinder werden jetzt entfernt, da sie das Prüfergebnis verfälschen können. Der Abstand zwischen den Schenkeln wird nun bestimmt.

Eines der beiden Muster wird unter Raumtemperatur gelagert und das andere bei 60 °C.

An den jeweiligen unteren Schenkel des "C-Prüflings" wird ein 1 kg-Gewicht gehängt. Nach einer Stunde wird die Auslenkung des Kabelbündels notiert (Auslenkverhalten 1 h bei RT bzw. 60 °C) und das Gewicht entfernt. Nach einer Minute wird die Auslenkung erneut bestimmt (Rückstellverhalten 1 min bei RT bzw. 60 °C). Nach einer Stunde wird die Auslenkung dann wieder bestimmt und notiert (Rückstellverhalten 1 h bei RT bzw. 60 °C).

Die ermittelten Werte der C-Form-Verformung bei wurden in drei Kategorien eingestuft, gut geeignet für die Anwendung, eingeschränkt geeignet für die Anwendung und nicht geeignet für die Anwendung. Die Kategorien wurden wie folgt bewertet:

**Bewertungskategorien C-Form-Biegeversuch (Raumtemperatur):**

+ gut geeignet für die Anwendung (< 15 % Auslenkung)

O eingeschränkt geeignet für die Anwendung (>15-30 %)

- nicht geeignet für die Anwendung (>30 %)

**Bewertungskategorien C-Form-Biegeversuch (60 °C):**

+ gut geeignet für die Anwendung (< 25 % Auslenkung)

O eingeschränkt geeignet für die Anwendung (>25-40 %)

- nicht geeignet für die Anwendung (>40 %)

**Bewertungskategorien C-Form-Biegeversuch (Rückstellverhalten bei RT und 60 °C):**

+ gut geeignet für die Anwendung (< 10 % Auslenkung)

O eingeschränkt geeignet für die Anwendung (10-30 %)

- nicht geeignet für die Anwendung (>30 %)

Zum Vergleich wurde ein kommerziell erhältliches Klebeband, tesa® 51036, dem gleichen Versuch unterworfen. Die Ergebnisse sind ebenfalls in der nachfolgenden Tabelle 1 aufgeführt.

Tabelle 1:

| | 3-Punkt Biegeversuch | C-Form-Verformung bei RT | C-Form-Rückstellverhalten bei RT |
|---|---|---|---|
| Beispiel 1 | + | + | + |
| tesa® 51036 | - | - | - |

| | C-Form-Verformung bei 60 °C | C-Form-Rückstellverhalten bei 60 °C |
|---|---|---|
| Beispiel 1 | + | + |
| tesa® 51036 | - | - |
| Legende:<br>+ gut geeignet für die Anwendung<br>o eingeschränkt geeignet für die Anwendung<br>- nicht geeignet für die Anwendung | | |

## Patentansprüche

**1.** Verfahren zum Ummanteln von langgestrecktem Gut wie insbesondere Leitungen oder Kabelsätzen, mit einem Klebeband umfassend einen bandförmigen Träger, der auf mindestens einer Seite mit einer haftklebrigen Klebemasse versehen ist, wobei die Klebemasse eine polymere Filmbildner-Matrix sowie eine härtbare Zusammensetzung umfasst,

wobei die härtbare Zusammensetzung ein oder mehrere Epoxidharze sowie zumindest ein Härtungsreagenz für Epoxidharze umfasst,
wobei das Härtungsreagenz zumindest eine Imidazolverbindung der allgemeinen Formel

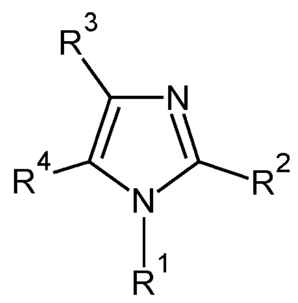

umfasst, wobei
$R^1$, $R^2$, $R^3$ und $R^4$ unabhängig voneinander Wasserstoff oder funktionelle Gruppen oder organische Reste sind, mit der Maßgabe, dass zumindest einer der Reste $R^1$, $R^2$, $R^3$ und $R^4$ eine funktionelle Gruppe oder ein organischer Rest $R^{Het}$ ist, der zumindest ein Heteroatom aufweist,
wobei das Klebeband in einer Schraubenlinie um das langgestreckte Gut geführt wird oder das langgestreckte Gut in axialer Richtung von dem Klebeband umhüllt wird, das langgestreckte Gut mitsamt dem umhüllenden Klebeband in die gewünschte Anordnung, insbesondere in den Kabelsatzplan gebracht wird, das langgestreckte Gut in dieser Anordnung gehalten wird, die aushärtbare Klebemasse durch die Zufuhr von thermischer Energie insbesondere bei einer Temperatur zwischen zu 120 °C und 200 °C für 10 bis 120 Minuten zum Aushärten gebracht wird,
**dadurch gekennzeichnet, dass**
die Imidazolverbindung in Form eines Imidazol-Säure-Addukts eingesetzt wird.

**2.** Verfahren nach Anspruch 1, **dadurch gekennzeichnet, dass** der das Heteroatom aufweisende Rest $R^{Het}$ ein zumindest ein Stickstoffatom aufweisender Rest $R^{Het}_N$ ist.

**3.** Verfahren nach Anspruch 1, **dadurch gekennzeichnet, dass** der das Heteroatom aufweisende Rest $R^{Het}$ ein zumindest ein Sauerstoffatom aufweisender Rest $R^{Het}_O$ ist.

4. Verfahren nach einem der vorangehenden Ansprüche, **dadurch gekennzeichnet, dass** zwei oder mehr der Reste $R^1$, $R^2$, $R^3$ und $R^4$ identisch oder unabhängig voneinander gewählte funktionelle Gruppen oder organische Reste $R^{Het}$ sind, die jeweils zumindest ein Heteroatom aufweisen, insbesondere derart, dass zumindest einer der Reste $R^{Het}$ ein Rest $R^{Het}{}_N$ und/oder zumindest einer der Reste $R^{Het}$ ein Rest $R^{Het}{}_o$ ist.

5. Verfahren nach einem der vorangehenden Ansprüche, **dadurch gekennzeichnet, dass** der Rest $R^{Het}{}_N$ eine Triazingruppe oder eine Cyanogruppe, insbesondere eine Cyanoethylgruppe, ist oder beinhaltet.

6. Verfahren nach einem der vorangehenden Ansprüche, **dadurch gekennzeichnet, dass** der Rest $R^1$ eine Cyanoethylgruppe ist oder der Rest $R^1$ eine zweifach amingruppensubstituierte Trazingruppe ist oder umfasst.

7. Verfahren nach einem der vorangehenden Ansprüche, **dadurch gekennzeichnet, dass** der Rest $R^{Het}{}_o$ eine Hydroxygruppe, insbesondere eine Hydroxymethylgruppe, ist oder umfasst.

8. Verfahren nach einem der vorangehenden Ansprüche, **dadurch gekennzeichnet, dass** die Reste $R^1$ bis $R^4$, die keine Reste $R^{Het}$ sind, jeweils unabhängig voneinander Wasserstoff oder ein aliphatischer oder aromatischer Kohlenwasserstoffrest mit 1 bis 15 Kohlenstoffatomen, der keine Heteroatome aufweist, sind.

9. Verfahren nach einem der vorangehenden Ansprüche, **dadurch gekennzeichnet, dass** die Säure des Imidazol-Säure-Addukts Trimellitsäure oder Isocyanursäure ist.

10. Verfahren nach einem der vorangehenden Ansprüche, **dadurch gekennzeichnet, dass** die Imidazolverbindung in partikulärer Form eingesetzt wird, insbesondere in der härtbaren Zusammensetzung dispergiert vorliegt.

11. Verfahren nach einem der vorangehenden Ansprüche, **dadurch gekennzeichnet, dass** mindestens eines der Epoxidharze der härtbaren Zusammensetzung ein elastomermodifiziertes, insbesondere nitrilkautschukmodifiziertes Epoxidharz, und/oder ein fettsäuremodifiziertes Epoxidharz ist.

12. Verfahren nach einem der vorangehenden Ansprüche, **dadurch gekennzeichnet, dass** das Härtungsreagenz einen oder mehrere sich von der Imidazolverbindung unterscheidende Verbindungen als Härter oder Beschleuniger für die Härtungsreaktion der Epoxidharze der härtbaren Zusammensetzung umfasst.

13. Verfahren nach einem der vorangehenden Ansprüche, **dadurch gekennzeichnet, dass** die sich von der Imidazolverbindung unterscheidenden Härter beziehungsweise Beschleuniger gewählt sind aus der Liste aus

- Dicyandiamid
- Anhydriden
- Epoxy-Amin-Addukten
- Hydraziden
- Reaktionsprodukten aus Disäuren und multifunktionellen Aminen, wie insbesondere Reaktionsprodukten aus Phthalsäure und Diethylentriamin.

14. Verfahren nach einem der vorangehenden Ansprüche, **dadurch gekennzeichnet, dass** als polymere Filmbildner-Matrix ganz oder teilweise ein oder mehrere thermoplastische Polyurethane oder ein oder mehrere nicht-thermoplastische Elastomere eingesetzt werden.

15. Ummanteltes langgestrecktes Gut, wie insbesondere ein Kabelsatz, erhalten nach zumindest einem der vorherigen Ansprüche.

16. Fahrzeug, enthaltend ummanteltes langgestrecktes Gut nach Anspruch 15.

## Claims

1. Method of jacketing elongate items, such as wires or cable looms in particular, with an adhesive tape comprising a carrier in strip form that has been provided with a pressure-sensitive adhesive on at least one side, where the adhesive comprises a polymeric film former matrix and a curable composition,

where the curable composition comprises one or more epoxy resins and at least one curing reagent for epoxy resins, where the curing reagent comprises at least one imidazole compound of the general formula

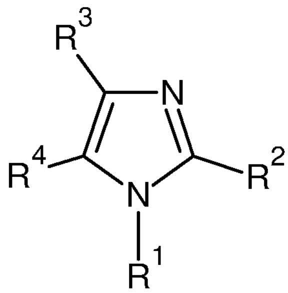

where
$R^1$, $R^2$, $R^3$ and $R^4$ are independently hydrogen or functional groups or organic radicals,
with the proviso that at least one of the $R^1$, $R^2$, $R^3$ and $R^4$ radicals is a functional group or an organic $R^{Het}$ radical having at least one heteroatom,
where the adhesive tape is run in a helical line around the elongate item or the elongate item is wrapped by the adhesive tape in axial direction, the elongate item together with the wrapping adhesive tape is put in the desired arrangement, especially in the cable loom map, the elongate item is held in this arrangement, the curable adhesive is made to cure by the supply of thermal energy, especially at a temperature between 120°C and 200°C for 10 to 120 minutes,
**characterized in that**
the imidazole compound is used in the form of an imidazole-acid adduct.

2. Method according to Claim 1, **characterized in that** the $R^{Het}$ radical having the heteroatom is an $R^{Het}_N$ radical having at least one nitrogen atom.

3. Method according to Claim 1, **characterized in that** the $R^{Het}$ radical having the heteroatom is an $R^{Het}_o$ radical having at least one oxygen atom.

4. Method according to any of the preceding claims, **characterized in that** two or more of the $R^1$, $R^2$, $R^3$ and $R^4$ radicals are identically or independently selected functional groups or organic $R^{Het}$ radicals, each of which has at least one heteroatom, especially in such a way that at least one of the $R^{Het}$ radicals is an $R^{Het}_N$ radical and/or at least one of the $R^{Het}$ radicals is an $R^{Het}_o$ radical.

5. Method according to any of the preceding claims, **characterized in that** the $R^{Het}_N$ radical is or includes a triazine group or a cyano group, especially a cyanoethyl group.

6. Method according to any of the preceding claims, **characterized in that** the $R^1$ radical is a cyanoethyl group or the $R^1$ radical is or comprises a doubly amine groupsubstituted triazine group.

7. Method according to any of the preceding claims, **characterized in that** the $R^{Het}_o$ group is or comprises a hydroxy group, especially a hydroxymethyl group.

8. Method according to any of the preceding claims, **characterized in that** the $R^1$ to $R^4$ radicals that are not $R^{Het}$ radicals are each independently hydrogen or an aliphatic or aromatic hydrocarbyl radical which has 1 to 15 carbon atoms and does not have any heteroatoms.

9. Method according to any of the preceding claims, **characterized in that** the acid of the imidazole-acid adduct is trimellitic acid or isocyanuric acid.

10. Method according to any of the preceding claims, **characterized in that** the imidazole compound is used in particulate form, and is especially in dispersed form in the curable composition.

11. Method according to any of the preceding claims, **characterized in that** at least one of the epoxy resins of the curable composition is an elastomer-modified, especially nitrile rubber-modified, epoxy resin, and/or a fatty acid-modified

epoxy resin.

**12.** Method according to any of the preceding claims, **characterized in that** the curing reagent comprises one or more compounds other than the imidazole compound as curing agent or accelerator for the curing reaction of the epoxy resins of the curable composition.

**13.** Method according to any of the preceding claims, **characterized in that** the curing agents or accelerators other than the imidazole compound are selected from the list of

- dicyandiamide
- anhydrides
- epoxy-amine adducts
- hydrazides
- reaction products of diacids and polyfunctional amines, such as, in particular, reaction products of phthalic acid and diethylenetriamine.

**14.** Method according to any of the preceding claims, **characterized in that** polymeric film former matrices used are wholly or partly one or more thermoplastic polyurethanes or one or more non-thermoplastic elastomers.

**15.** Jacketed elongate item, such as a cable loom in particular, obtained according to at least one of the preceding claims.

**16.** Vehicle comprising a jacketed elongate item according to Claim 15.

## Revendications

**1.** Procédé de gainage de produits allongés, tels que notamment des conduites ou des faisceaux de câbles, avec une bande adhésive comprenant un support en forme de bande qui est pourvu sur au moins un côté d'une masse adhésive autocollante, la masse adhésive comprenant une matrice filmogène polymère ainsi qu'une composition durcissable,

la composition durcissable comprenant une ou plusieurs résines époxy ainsi qu'au moins un réactif de durcissement pour résines époxy,
le réactif de durcissement comprenant au moins un composé imidazole de formule générale

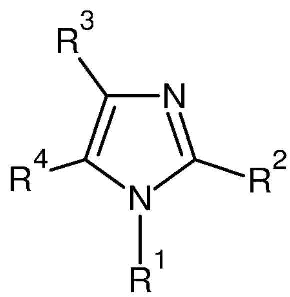

dans laquelle
$R^1$, $R^2$, $R^3$ et $R^4$ sont indépendamment l'hydrogène ou des groupes fonctionnels ou des radicaux organiques, à condition qu'au moins l'un des radicaux $R^1$, $R^2$, $R^3$ et $R^4$ soit un groupe fonctionnel ou un radical organique $R^{Het}$ qui présente au moins un hétéroatome,
la bande adhésive étant guidée en une ligne hélicoïdale autour du produit allongé ou le produit allongé étant enveloppé dans la direction axiale par la bande adhésive, le produit allongé avec la bande adhésive qui l'enveloppe étant amené dans l'agencement souhaitée, notamment dans le plan du faisceau de câbles, le produit allongé étant maintenu dans cet agencement, la masse adhésive durcissable étant amenée à durcir par l'apport d'énergie thermique, notamment à une température comprise entre 120 °C et 200 °C pendant 10 à 120 minutes,
**caractérisé en ce que**
le composé imidazole est utilisé sous la forme d'un produit d'addition imidazole-acide.

2. Procédé selon la revendication 1, **caractérisé en ce que** le radical $R^{Het}$ présentant l'hétéroatome est un radical $R^{Het}{}_N$ présentant au moins un atome d'azote.

3. Procédé selon la revendication 1, **caractérisé en ce que** le radical $R^{Het}$ présentant l'hétéroatome est un radical $R^{Het}{}_o$ présentant au moins un atome d'oxygène.

4. Procédé selon l'une quelconque des revendications précédentes, **caractérisé en ce que** deux ou plusieurs des radicaux $R^1$, $R^2$, $R^3$ et $R^4$ sont des groupes fonctionnels ou des radicaux organiques $R^{Het}$ identiques ou choisis indépendamment les uns des autres, chacun présentant au moins un hétéroatome, notamment de telle sorte qu'au moins un des radicaux $R^{Het}$ est un radical $R^{Het}{}_N$ et/ou au moins un des radicaux $R^{Het}$ est un radical $R^{Het}{}_o$.

5. Procédé selon l'une quelconque des revendications précédentes, **caractérisé en ce que** le radical $R^{Het}{}_N$ est ou contient un groupe triazine ou un groupe cyano, notamment un groupe cyanoéthyle.

6. Procédé selon l'une quelconque des revendications précédentes, **caractérisé en ce que** le groupe $R^1$ est un groupe cyanoéthyle ou le groupe $R^1$ est ou comprend un groupe trazine substitué deux fois par des groupes amine.

7. Procédé selon l'une quelconque des revendications précédentes, **caractérisé en ce que** le radical $R^{Het}{}_o$ est ou comprend un groupe hydroxyle, notamment un groupe hydroxyméthyle.

8. Procédé selon l'une quelconque des revendications précédentes, **caractérisé en ce que** les radicaux $R^1$ à $R^4$, qui ne sont pas des radicaux $R^{Het}$ , sont chacun indépendamment un atome d'hydrogène ou un radical hydrocarboné aliphatique ou aromatique ayant de 1 à 15 atomes de carbone, ne présentant pas d'hétéroatomes.

9. Procédé selon l'une quelconque des revendications précédentes, **caractérisé en ce que** l'acide du produit d'addition imidazole-acide est l'acide trimellitique ou l'acide isocyanurique.

10. Procédé selon l'une quelconque des revendications précédentes, **caractérisé en ce que** le composé imidazole est utilisé sous forme particulaire, notamment est présent sous forme dispersée dans la composition durcissable.

11. Procédé selon l'une quelconque des revendications précédentes, **caractérisé en ce qu'**au moins une des résines époxy de la composition durcissable est une résine époxy modifiée par un élastomère, notamment une résine époxy modifiée par un caoutchouc nitrile, et/ou une résine époxy modifiée par un acide gras.

12. Procédé selon l'une quelconque des revendications précédentes, **caractérisé en ce que** le réactif de durcissement comprend un ou plusieurs composés autres que le composé imidazole en tant qu'agent de durcissement ou accélérateur de la réaction de durcissement des résines époxy de la composition durcissable.

13. Procédé selon l'une quelconque des revendications précédentes, **caractérisé en ce que** les agents de durcissement ou les accélérateurs autres que le composé imidazole sont choisis dans la liste suivante

   - dicyandiamide
   - anhydrides
   - produits d'addition époxy-amine
   - hydrazides
   - produits de réaction de diacides et d'amines multifonctionnelles, tels que notamment produits de réaction d'acide phtalique et de diéthylènetriamine.

14. Procédé selon l'une quelconque des revendications précédentes, **caractérisé en ce que** l'on utilise comme matrice filmogène polymérique, en totalité ou en partie, un ou plusieurs polyuréthanes thermoplastiques ou un ou plusieurs élastomères non thermoplastiques.

15. Produit allongé gainé, tel que notamment un faisceau de câbles, obtenu selon au moins l'une quelconque des revendications précédentes.

16. Véhicule, contenant un produit allongé gainé selon la revendication 15.

Fig. 1

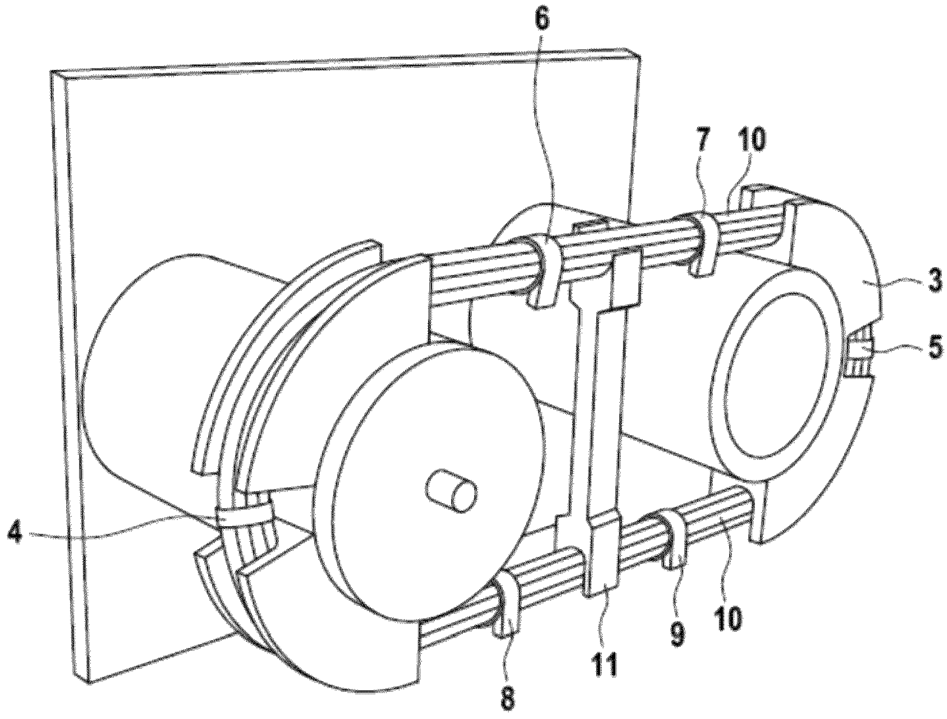

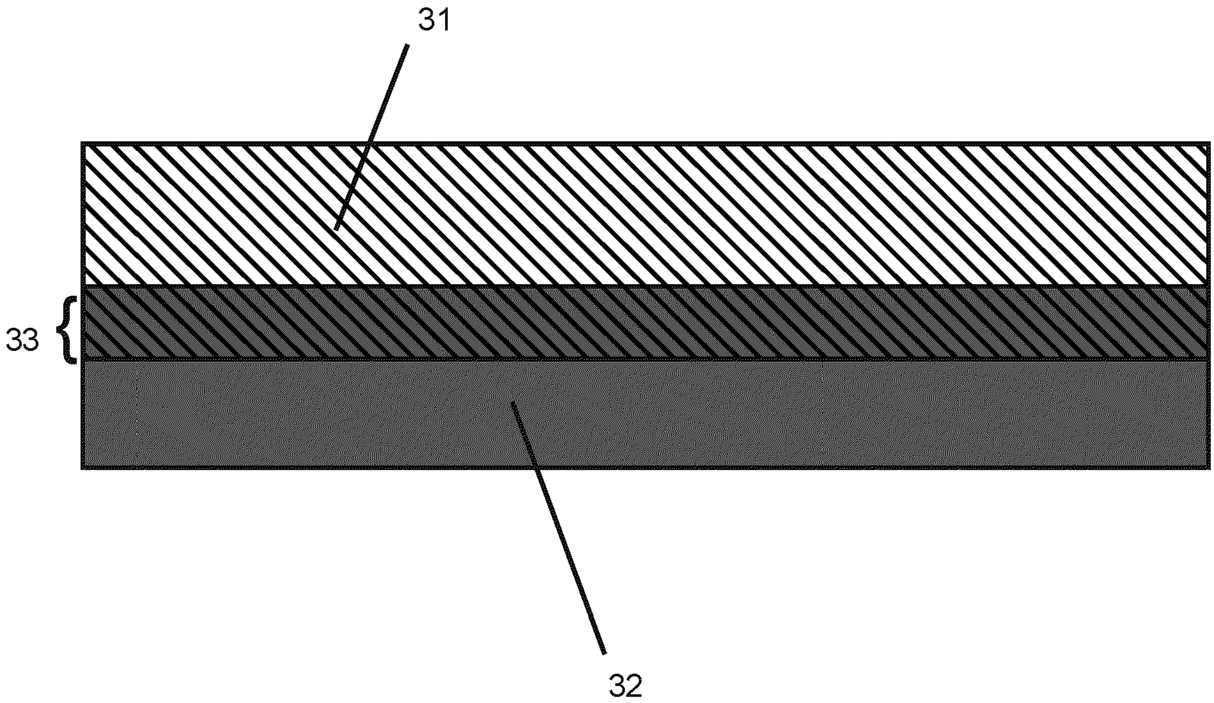


Fig. 2

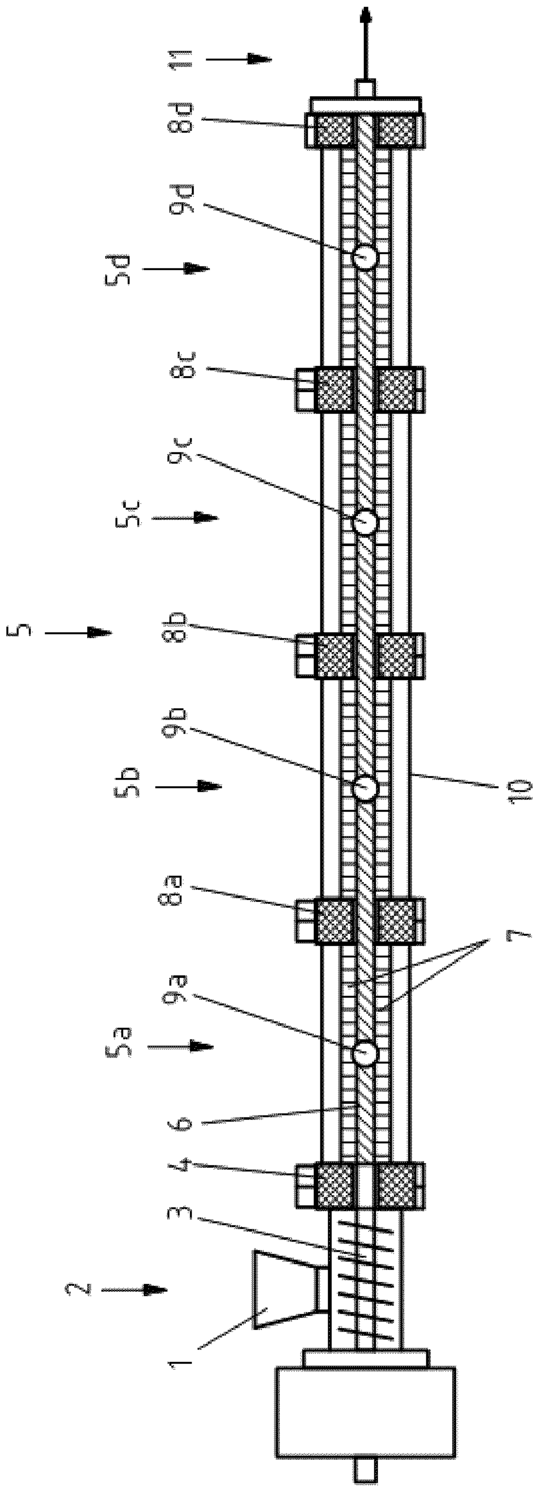


Fig. 3

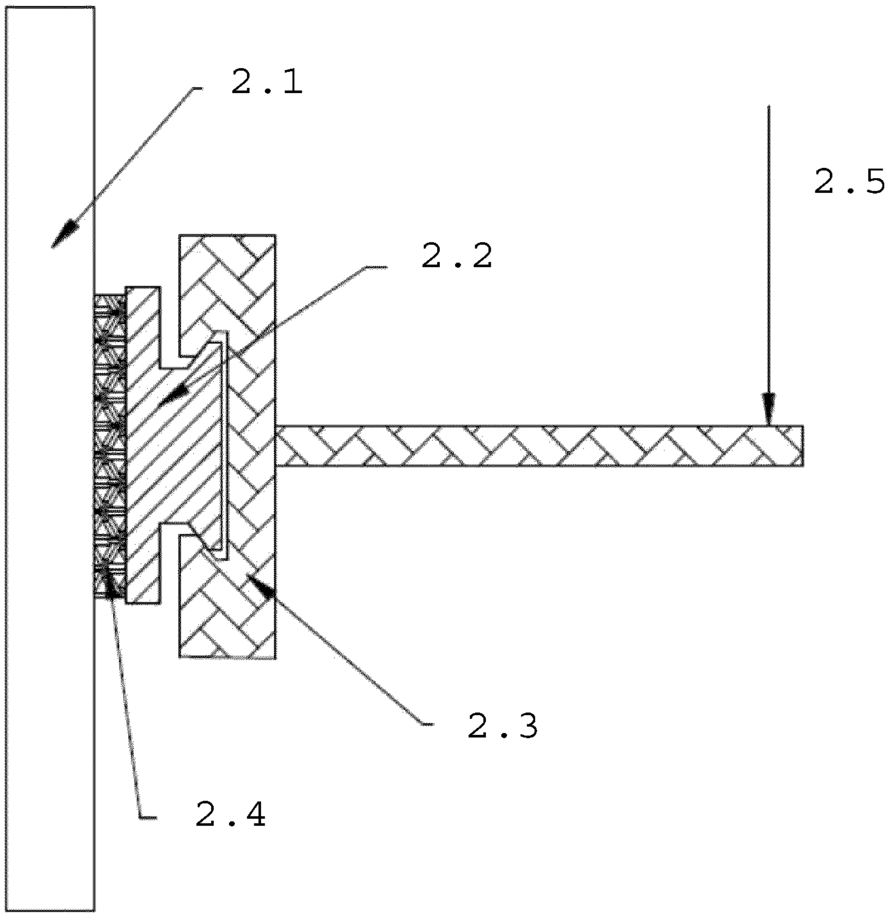


Fig. 4

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 1848006 A2
- DE 102013213726 A1
- JP 2004056861 A
- EP 3499664 A1
- EP 2497805 A1
- WO 2015004190 A1
- EP 1114834 A
- US 8835574 A
- EP 0071212 B1
- EP 1448744 A1

### In der Beschreibung aufgeführte Nicht-Patentliteratur

- *CHEMICAL ABSTRACTS*, 24801-88-5
- *CHEMICAL ABSTRACTS*, 68490-66-4
- *CHEMICAL ABSTRACTS*, 38668-46-1
- *CHEMICAL ABSTRACTS*, 61698-32-6
- *CHEMICAL ABSTRACTS*, 931-36-2
- *CHEMICAL ABSTRACTS*, 670-96-2
- *CHEMICAL ABSTRACTS*, 23996-55-6